(19) Europäisches Patentamt
European Patent Office
Office européen des brevets

(11) EP 4 678 677 A1

(12) EUROPEAN PATENT APPLICATION
published in accordance with Art. 153(4) EPC

(43) Date of publication:
**14.01.2026 Bulletin 2026/03**

(21) Application number: **24770664.1**

(22) Date of filing: **06.03.2024**

(51) International Patent Classification (IPC):
*C08G 59/06* (2006.01) *C08G 59/24* (2006.01)

(52) Cooperative Patent Classification (CPC):
**C08G 59/06; C08G 59/24**

(86) International application number:
**PCT/JP2024/008459**

(87) International publication number:
**WO 2024/190555 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.03.2023 JP 2023037191**

(71) Applicant: **Mitsubishi Chemical Corporation**
**Tokyo 100-8251 (JP)**

(72) Inventors:
- **TANAKA, Kentaro**
  **Tokyo 100-8251 (JP)**
- **UCHIYAMA, Kei**
  **Tokyo 100-8251 (JP)**
- **URANO, Wataru**
  **Tokyo 100-8251 (JP)**

(74) Representative: **TBK**
**Bavariaring 4-6**
**80336 München (DE)**

(54) **BISPHENOL DIGLYCIDYL ETHER COMPOSITION, CURABLE COMPOSITION, CURED PRODUCT, AND ELECTRICAL/ELECTRONIC COMPONENT**

(57) A bisphenol-type diglycidyl ether composition containing a bisphenol C-type diglycidyl ether represented by the following formula (1) and a compound represented by the following formula (2) :

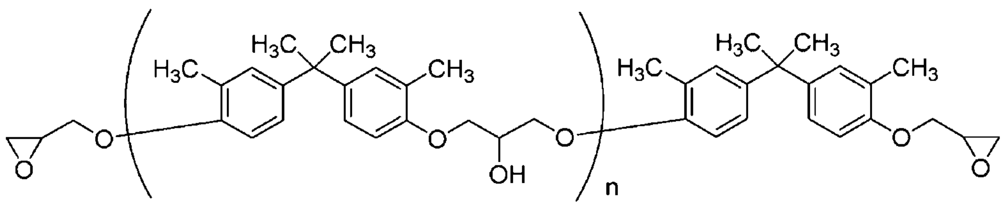

···(1)

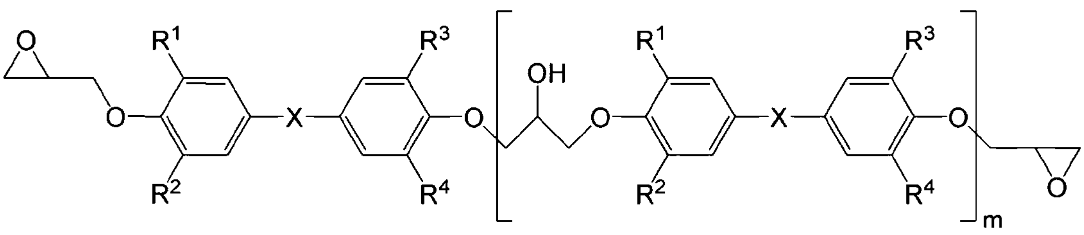

···(2)

wherein, in the above formula (2), substituents $R^1$ to $R^4$ are each independently selected from the group consisting of a

EP 4 678 677 A1

Processed by Luminess, 75001 PARIS (FR)

(Cont. next page)

hydrogen atom and an alkyl group having 1 to 5 carbon atoms, provided that a case where all the substituents $R^1$ to $R^4$ are hydrogen atoms, a case where all the substituents are alkyl groups each having 1 to 5 carbon atoms, and a case where the combination of $R^1$ and $R^2$ is the same as the combination of $R^3$ and $R^4$ are excluded; a linking group X each independently represents a divalent hydrocarbon group having 1 to 13 carbon atoms, -O-, -S-, $-SO_2-$, $-C(CF_3)_2-$, -CO-, or a direct bond; and m represents the number of repetitions and is an integer of 0 or more, provided that a case where the compound represented by the formula (2) is the bisphenol C-type diglycidyl ether represented by the formula (1) is excluded.

## Description

### TECHNICAL FIELD

The present invention relates to a bisphenol-type diglycidyl ether composition, a curable composition, a cured product, and an electrical/electronic component, and more specifically relates to a bisphenol-type diglycidyl ether composition excellent in heat resistance, low dielectric characteristics, handleability, low average linear coefficient of expansion, and low storage elastic modulus, a curable composition including the composition and a cured product thereof, as well as an electrical/electronic component.

### BACKGROUND ART

Epoxy resins typified by diglycidyl ethers are excellent in adhesiveness, water resistance, mechanical strength, and electrical characteristics, and therefore are used in various fields of adhesives, coating materials, materials for civil engineering and construction, insulation materials for electrical/electronic components, and the like. In particular, epoxy resins are widely used for insulation casting, layering materials, sealing materials, and the like in the electrical/electronic field. In recent years, multi-layer circuit substrates used for electrical/electronic equipment have been demanded to be further multi-layered, increased in density, decreased in thickness, decreased in weight, and enhanced in reliability and molding processability because such equipment has been progressively decreased in size, decreased in weight, and increased in functionality.

Examples of important performance required for epoxy resins serving as materials of electrical/electronic components such as layered plates for electrical/electronic circuits include low dielectric characteristics. In recent years, communication frequencies have been progressively higher for enhancements in the amount and rate of information propagation, and, in particular, an increase in transmission loss ($\alpha$) has been largely problematic. It is meant that, as the value of $\alpha$ is lower, information signals are less attenuated and higher reliability of information can be more ensured. Since $\alpha$ is proportional to the frequency (f), communication in a high-frequency region leads to a higher value of $\alpha$ and a reduction in reliability. Examples of a procedure for decreasing $\alpha$ include a method for reducing the dielectric tangent (tan$\delta$) to which $\alpha$ is proportional as in f. Materials low in tan$\delta$, namely materials having low dielectric characteristics, are demanded for high-speed transmission of communication signals.

Electrical/electronic components such as layered plates for electrical/electronic circuits are demanded to be high in reliability, and epoxy resins serving as materials are demanded to not only have low dielectric characteristics but also be balanced with various characteristics such as low average linear coefficient of expansion, low storage elastic modulus, heat resistance, and flame retardance. In particular, characteristics such as heat resistance, low average linear coefficient of expansion, and low storage elastic modulus are essential for allowing reliability to be ensured in a broad temperature region.

Low-molecular weight-type bisphenol A-type epoxy resins (bisphenol A-type diglycidyl ethers) are generally widely known as epoxy resins serving as materials of electrical/electronic components such as layered plates for electrical/electronic circuits. However, heat resistance and dielectric characteristics have not been sufficient. In recent years, diglycidyl ethers having various backbones have been studied, and Patent Document 1 has disclosed bisphenol-type diglycidyl ethers of various structures, as hydrophobic epoxy resin compositions. Furthermore, Patent Document 2 has disclosed a bisphenol AF-type diglycidyl ether that is more excellent in heat resistance and dielectric characteristics than bisphenol A-type diglycidyl ethers.

### PRIOR ART DOCUMENTS

### PATENT DOCUMENTS

Patent Document 1: US10344160B1
Patent Document 2: JP2013-155337A

### SUMMARY OF THE INVENTION

### TECHNICAL PROBLEM

In recent years, layered plates for electrical/electronic circuits have been progressively complicated and smaller-scaled and compositional ratios of resins therefore have been likely complicated due to, for example, an enhancement in

dimension stability according to a decrease in thickness, and suppression of the energy loss of communication signals according to increases in amount of information and rate of communication in information communication, and thus the importance of low-molecular weight-type epoxy resins has been increased which is favorable in solubility in solvent media, compatibility with other resins, and dispersibility of microparticulate fillers such as silica, and excellent in handleability.

Furthermore, epoxy resins of materials used and cured products thereof have also been increasingly demanded to be higher in heat resistance so as to deal with an increase in amount of heat generation due to an increase in the speed of processing of semiconductor devices and an increase in amount of heat generation due to miniaturization of semiconductor integrated circuits (increase in degree of integration) and also withstand continuous use under a high temperature state. Among low-molecular weight-type bisphenol-type diglycidyl ethers, bisphenol A-type diglycidyl ethers have not been commonly sufficient in terms of heat resistance and dielectric characteristics.

However, the bisphenol AF-type epoxy resin described in Patent Document 2 has the problem of not allowing a cured product to sufficiently satisfy low dielectric characteristics. In recent years, studies for regulation of organic fluorine compounds having adverse effects on the environment and ecosystems have been advanced, and physical properties equal to or more than conventional physical properties, without use of any fluorine, have been demanded.

Furthermore, in recent years, multi-layer circuit substrates used for electrical/electronic equipment have been demanded to be further multi-layered, increased in density, decreased in thickness, decreased in weight, and enhanced in reliability and molding processability because such equipment has been progressively decreased in size, decreased in weight, and increased in functionality. Therefore, the importance of cured products is increased in which warpage is reduced or cracks hardly occur. Physical properties demanded for epoxy resins include a low average linear coefficient of expansion, which is necessary for reducing warpage, and a low storage elastic modulus, which is necessary for minimizing the occurrence of cracks, from the viewpoint of stress relaxation. Processes for manufacturing multi-layer printed-wiring substrate materials are demanded to be enhanced in workability by prevention of dripping during impregnation of reinforcement base materials such as a glass cloth with epoxy resins. Therefore, epoxy resins are importantly high in viscosity at the lower temperature and low in viscosity at the higher temperature and are required to be large in difference between the respective melt viscosities at the lower temperature and at the higher temperature.

An object of the present invention is to provide a bisphenol-type diglycidyl ether composition (epoxy resin) low in molecular weight, excellent in handleability, and excellent in heat resistance, low dielectric characteristics, low average linear coefficient of expansion, and low storage elastic modulus, a curable composition including the bisphenol-type diglycidyl ether composition and a curing agent, and a cured product of the curable composition, as well as an electrical/electronic component including the curable composition.

## SOLUTION TO PROBLEM

The present inventor has made intensive studies and, as a result, has found that the above problem can be solved by a bisphenol-type diglycidyl ether composition including a bisphenol C-type diglycidyl ether among bisphenol-type diglycidyl ethers, and a compound having a specified structure.

Specifically, the gist of the present invention consists in the following [1] to [12].

[1] A bisphenol-type diglycidyl ether composition containing a bisphenol C-type diglycidyl ether represented by the following formula (1) and a compound represented by the following formula (2):

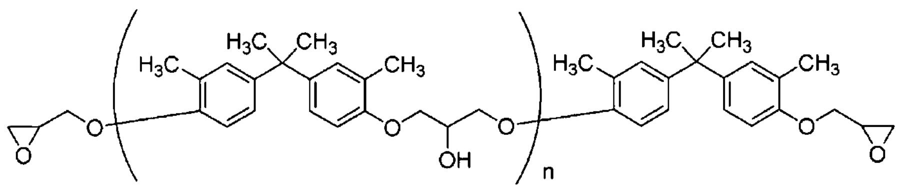

···(1)

wherein, in the above formula (1), n represents the number of repetitions and is an integer of 0 or more,

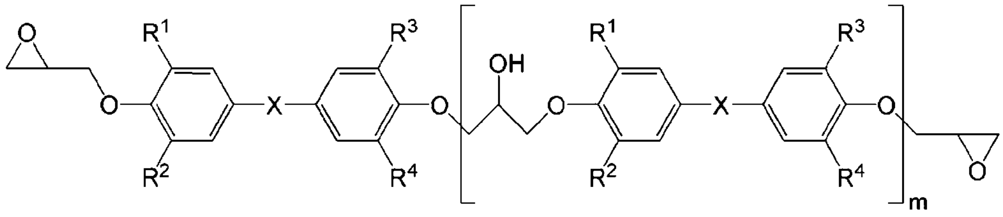

...(2)

wherein, in the above formula (2), substituents $R^1$ to $R^4$ are each independently selected from the group consisting of a hydrogen atom, and an alkyl group having 1 to 5 carbon atoms, provided that a case where all the substituents $R^1$ to $R^4$ are hydrogen atoms, a case where all the substituents are alkyl groups each having 1 to 5 carbon atoms, and a case where the combination of $R^1$ and $R^2$ is the same as the combination of $R^3$ and $R^4$ are excluded; a linking group X each independently represents a group selected from the group consisting of a divalent hydrocarbon group having 1 to 13 carbon atoms, -O-, -S-, $-SO_2-$, $-C(CF_3)_2-$, and -CO-, or a direct bond; and m represents the number of repetitions and is an integer of 0 or more, provided that a case where the compound represented by the formula (2) is the bisphenol C-type diglycidyl ether represented by the formula (1) is excluded.

[2] The bisphenol-type diglycidyl ether composition according to [1], wherein a content of the compound represented by the formula (2) in the bisphenol-type diglycidyl ether composition is 0.001 to 15.000% by area in high-performance liquid chromatography measurement.
[3] The bisphenol-type diglycidyl ether composition according to [1] or [2], wherein, in the formula (2), one to three of the substituents $R^1$ to $R^4$ are hydrogen atoms and the remainder are alkyl groups having 1 to 3 carbon atoms; the linking group X is an alkylene group having 1 to 13 carbon atoms; and m is 0 or 1.
[4] The bisphenol-type diglycidyl ether composition according to claim 1, wherein a content of the bisphenol C-type diglycidyl ether represented by the formula (1) in the bisphenol-type diglycidyl ether composition is 40.000 to 99.999% by area in high-performance liquid chromatography measurement.
[5] The bisphenol-type diglycidyl ether composition according to any of [1] to [4], wherein an epoxy equivalent is 184 to 250 g/equivalent.
[6] The bisphenol-type diglycidyl ether composition according to any of [1] to [5], wherein the composition is liquid at room temperature and has a melt viscosity ratio, calculated by the following formula, of $3.00 \times 10^{-5}$ or less.

Melt viscosity ratio = Shear viscosity (Pa·s) at 100°C/Shear viscosity (Pa·s) at 25°C.

[7] The bisphenol-type diglycidyl ether composition according to any of [1] to [6], wherein a total amount of chlorine in the bisphenol-type diglycidyl ether composition is 5,000 ppm or less.
[8] A curable composition including the bisphenol-type diglycidyl ether composition according to any of [1] to [7], and a curing agent.
[9] The curable composition according to [8], including the curing agent at a solid content of 0.1 to 100 parts by mass based on a solid content of 100 parts by mass of the bisphenol-type diglycidyl ether composition.
[10] The curable composition according to [8] or [9], wherein the curing agent is at least one selected from the group consisting of a phenol-based curing agent, an amide-based curing agent, an imidazole compound, and an active ester-based curing agent.
[11] A cured product of the curable composition according to any of [8] to [10].
[12] An electrical/electronic component comprising a cured product of the curable composition according to any of [8] to [10].

ADVANTAGEOUS EFFECTS OF INVENTION

According to the present invention, it is possible to provide a bisphenol-type diglycidyl ether composition (epoxy resin) which is excellent in handleability due to a low viscosity at the higher temperature and which has a high viscosity at the lower temperature to minimally cause dripping. Therefore, industrial handleability is expected to be higher in a process for manufacturing a multi-layer printed-wiring substrate material.
According to the present invention, it is possible to provide a bisphenol-type diglycidyl ether composition (epoxy resin), a curable composition, and a cured product which are excellent in heat resistance, low dielectric characteristics, low average linear coefficient of expansion, and low storage elastic modulus. Therefore, the bisphenol-type diglycidyl ether

composition (epoxy resin) according to the present invention and the curable composition including the bisphenol-type diglycidyl ether composition can be applied in various fields of adhesives, coating materials, building material for civil engineering, insulation materials for electrical/electronic components, and the like, and, in particular, are useful in insulation casting, layering materials, sealing materials, and the like in the electrical/electronic field. The bisphenol-type diglycidyl ether composition (epoxy resin) according to the present invention and the curable composition including the bisphenol-type diglycidyl ether composition can be suitably used in layered plates for electrical/electronic circuits, such as multi-layer printed wiring substrates and capacitors, adhesives such as film-shaped adhesives and liquid adhesives, semiconductor sealing materials, underfill materials, interchip fills for 3D-LSI's, insulation sheets, prepregs, heat dissipation substrates, and the like.

DETAILED DESCRIPTION OF THE INVENTION

Although embodiments of the present invention are described below in detail, the description of each constituent requirement described below is illustrative for embodiments of the present invention and the present invention is not limited to the following description content without departing from the gist thereof. In a case where the expression "to" is herein used, the expression is used as an expression encompassing numerical values or physical property values before and after "to".

The bisphenol-type diglycidyl ether composition (epoxy resin) of the present embodiment can include an epoxy compound containing a repeating structure and an epoxy compound of a monomolecular structure, and both of the epoxy compounds may also be expressed as "epoxy resin" or "epoxy resin composition" and sold in the art. A mixture further including a different epoxy resin from the bisphenol-type diglycidyl ether composition (epoxy resin) according to the present embodiment may also be expressed as "epoxy resin composition" or simply called "epoxy resin" in the art.

[Bisphenol-Type Diglycidyl Ether Composition]

A bisphenol-type diglycidyl ether composition according to one embodiment of the present invention contains a bisphenol C-type diglycidyl ether represented by the following formula (1) (bisphenol C-type epoxy resin; hereinafter, the resin is sometimes abbreviated as "compound (1)"), and a compound represented by the following formula (2) (hereinafter, sometimes abbreviated as "compound (2)"):

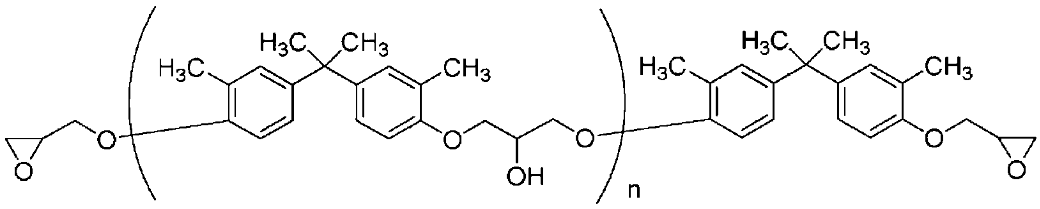

•••(1)

wherein, in the above formula (1), n represents the number of repetitions and is an integer of 0 or more,

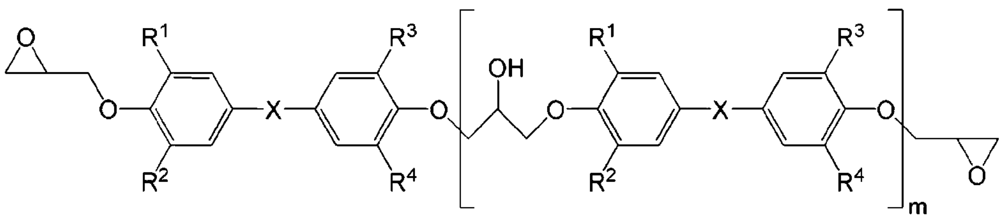

···(2)

wherein, in the above formula (2), substituents $R^1$ to $R^4$ are each independently selected from the group consisting of a hydrogen atom and an alkyl group having 1 to 5 carbon atoms, provided that a case where all the substituents $R^1$ to $R^4$ are hydrogen atoms, a case where all the substituents are alkyl groups each having 1 to 5 carbon atoms, and a case where the combination of $R^1$ and $R^2$ is the same as the combination of $R^3$ and $R^4$ are excluded; a linking group X each independently represents a group selected from the group consisting of a divalent hydrocarbon group having 1 to 13 carbon atoms, -O-, -S-, $-SO_2-$, $-C(CF_3)_2-$ and -CO-, or a direct bond; and m represents the number of repetitions and is an integer of 0 or more, provided that a case where the compound represented by the formula (2) is the bisphenol C-type diglycidyl ether represented by the formula (1) is excluded.

$R^1$ to $R^4$ are each independently selected from the group consisting of a hydrogen atom and an alkyl group having 1 to 5 carbon atoms, and the alkyl group may be branched. Specific examples include a methyl group, an ethyl group, a n-propyl group, an isopropyl group, a n-butyl group, a sec-butyl group, a tert-butyl group, a n-pentyl group, an isopentyl group, a neopentyl group, a tert-pentyl group, and the like. $R^1$ to $R^4$ are each preferably a methyl group, an ethyl group, or an isopropyl group, and most preferably a methyl group. Preferably, one to three of the substituents $R^1$ to $R^4$ are hydrogen atoms and the remainder are alkyl groups having 1 to 3 carbon atoms.

X is each independently a group selected from the group consisting of a divalent hydrocarbon group having 1 to 13 carbon atoms, -O-, -S-, $-SO_2-$, $-C(CF_3)_2-$ and -CO-, or a direct bond, preferably a direct bond or a divalent hydrocarbon group having 1 to 13 carbon atoms. Examples of the divalent hydrocarbon group having 1 to 13 carbon atoms preferably include an aliphatic hydrocarbon group having 1 to 13 carbon atoms, particularly preferably an alkylene group having 1 to 13 carbon atoms optionally having a branched chain. X is more preferably a direct bond, a methylene group, or an isopropylidene group, and most preferably an isopropylidene group.

In a case where plural Xs are present in the formula (2), such plural Xs may be the same as or different from each other.

In the formula (2), m is an integer of 0 or more, preferably 0 to 5, more preferably 0 to 3, and most preferably 0 or 1.

Specific examples of the compound (2) include the following formulae (A) to (C) in a case where X is an isopropylidene group.

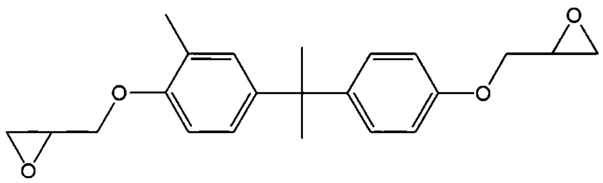

Formula (A)

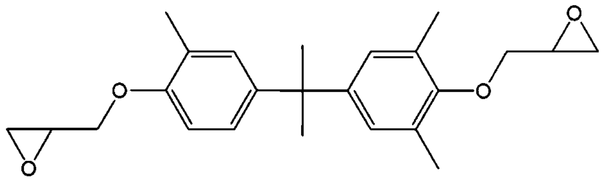

Formula (B)

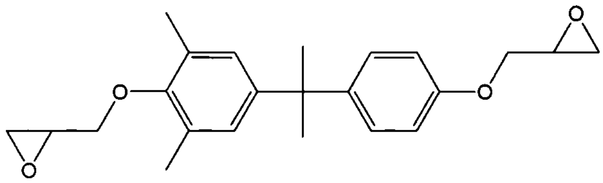

Formula (C)

[Content of Compound (2) in Bisphenol-Type Diglycidyl Ether Composition]

The content of the compound (2) in the bisphenol-type diglycidyl ether composition according to the present embodiment is preferably 0.001 to 15.000% by area, more preferably 0.020 to 8.000% by area, and further preferably 0.030 to 5.000% by area in high-performance liquid chromatography measurement. When the content of the compound (2) falls within the above range, the difference between the viscosity at a low temperature and the viscosity at a high temperature is smaller, thus workability during impregnation of a glass cloth or the like is enhanced, and a cured product is smaller in average linear coefficient of expansion and therefore can be reduced in warpage and is also smaller in storage elastic modulus, thereby easily leading to the occurrence of stress relaxation and minimizing the occurrence of cracks.

[Content of Compound (1) in Bisphenol-Type Diglycidyl Ether Composition]

The content of the compound (1) in the bisphenol-type diglycidyl ether composition according to the present embodiment is preferably 40.000 to 99.999% by area, more preferably 45.000 to 99.980% by area, and further preferably 50.000 to 99.970% by area in high-performance liquid chromatography measurement. When the content is equal to or more than the lower limit (% by area) in the above range, the resulting epoxy resin tends to have an appropriate viscosity from the viewpoint of handling.

The method for obtaining the bisphenol-type diglycidyl ether composition containing the compound (1) and the compound (2) is not particularly limited, and examples include a method including producing the compound (1) and the compound (2) respectively and then mixing them at a predetermined ratio, mixing raw materials of the compound (1) and

the compound (2) at a predetermined ratio, and thereafter performing epoxidation, or the like.

The bisphenol-type diglycidyl ether composition according to the present embodiment contains the compound (1) which has a bisphenol C-type structure and therefore can favorably keep dielectric characteristics and heat resistance. The bisphenol C-type structure has a rotation barrier due to a methyl group as a substituent of a benzene ring in the structure, exerts the effect by an increase in spatial volume and also is hardly affected by steric-electrostatic repulsion with the substituent, allows benzene rings in the structure to intermolecularly interact, and therefore can allow dielectric characteristics and heat resistance to be specifically favorably kept.

The bisphenol-type diglycidyl ether composition according to the present embodiment contains the compound (2) which has an asymmetric structure, and therefore the difference between the viscosity at a low temperature and the viscosity at a high temperature is smaller, and thus workability during impregnation of a glass cloth or the like is enhanced, and a cured product is smaller in average linear coefficient of expansion and therefore can be reduced in warpage and is also smaller in storage elastic modulus, thereby easily leading to the occurrence of stress relaxation and minimizing the occurrence of cracks. The asymmetric structure here means that the structures (types of substituents and/or binding positions of substituents) of two benzene rings bound by the linking group X in the formula (2) are different from each other.

As described above, the content of the compound (2) in the bisphenol-type diglycidyl ether composition, and the contents of a form of n = 0, a form of n = 1, and furthermore a component of n = 2 or more, can be determined by high-performance liquid chromatography measurement. Specifically, these contents can be determined by measurement in conditions shown in the section <Analysis of content of each component> in Examples described later.

Examples of a preferred combination of the compound (1) and the compound (2) included in the bisphenol-type diglycidyl ether composition according to the present embodiment include a combination of a compound (1-1) and a compound (2-1), a combination of a compound (1-1), a compound (2-1) and a compound (3-1), and a combination of a compound (1-1) and a compound (3-1), described in Examples below. It is noted that the combination of the compound (1) and the compound (2) in the bisphenol-type diglycidyl ether composition according to the present invention is not limited to the above specific combinations.

[Epoxy Equivalent]

The epoxy equivalent of the bisphenol-type diglycidyl ether composition according to the present embodiment preferably falls within a range of 184 to 250 g/equivalent. The epoxy equivalent is preferably 240 g/equivalent or less, more preferably 230 g/equivalent or less, and further preferably 210 g/equivalent or less from the viewpoint of favorable keeping of heat resistance and dielectric characteristics. The epoxy equivalent is preferably 185 g/equivalent or more, more preferably 186 g/equivalent or more, and particularly preferably 187 g/equivalent or more from the viewpoint of an enhancement in productivity. The epoxy equivalent can be controlled by a method for producing the bisphenol-type diglycidyl ether composition, described later.

[Resin Properties, Melt Viscosity Ratio]

The bisphenol-type diglycidyl ether composition according to the present embodiment is preferably liquid at room temperature from the viewpoints of favorably keeping handleability, being compatible with various inorganic/organic fillers and polymer components and being easily dissolved in solvent media. The melt viscosity ratio of the bisphenol-type diglycidyl ether composition according to the present embodiment, as calculated by the following formula, is preferably $3.00 \times 10^{-5}$ or less. The melt viscosity ratio is more preferably $2.90 \times 10^{-5}$ or less, further preferably $2.80 \times 10^{-5}$ or less, still further preferably $2.70 \times 10^{-5}$ or less, and particularly preferably $2.60 \times 10^{-5}$ or less from the viewpoint of favorable keeping of handleability and from the viewpoint of an increase in industrial productivity in use, and furthermore from the viewpoints of favorable keeping of compatibility with the curing agent and increases in dielectric characteristics and heat resistance.

Melt viscosity ratio = Shear viscosity (Pa·s) at 100°C/Shear viscosity (Pa·s) at 25°C.

The shear viscosities at 100°C and 25°C can be each measured with a viscoelasticity measurement apparatus or the like.

[Shear Viscosity]

The bisphenol-type diglycidyl ether composition according to the present embodiment is preferably high in viscosity at the lower temperature and low in viscosity at the higher temperature from the viewpoint of favorable keeping of handleability, from the viewpoint of an increase in industrial productivity in use, from the viewpoint of favorable keeping of compatibility with the curing agent, and from the viewpoint of improvement in dielectric characteristics, heat resistance and

adhesiveness between substrates.

The shear viscosity at 25°C is preferably 300 Pa·s or more, more preferably 350 Pa·s or more, further preferably 400 Pa·s or more, and particularly preferably 450 Pa·s or more. In this regard, the upper limit is not particularly limited and is usually 600 Pa·s or less.

The shear viscosity at 100°C is preferably 0.150 Pa·s or less, more preferably 0.145 Pa·s or less, further preferably 0.140 Pa·s or less, and particularly preferably 0.135 Pa·s or less. In this regard, the lower limit is not particularly limited and is usually 0.01 Pa·s or more.

The shear viscosity at each of the above temperatures can be measured with a viscoelasticity measurement apparatus or the like.

[Total Amount of Chlorine]

The total amount of chlorine in the bisphenol-type diglycidyl ether composition according to the present embodiment is preferably 5,000 ppm or less. The total amount of chlorine is preferably 3,000 ppm or less, further preferably 2,000 ppm or less, and particularly preferably 1,500 ppm or less from the viewpoint of an enhancement in reliability in use for an electrical/electronic component, in particular an insulation material. The total amount of chlorine can be measured according to Japanese Industrial Standards (JIS)K 7243-3:2005.

[Method for producing Bisphenol-Type Diglycidyl Ether Composition]

The method for producing the bisphenol-type diglycidyl ether composition according to the present embodiment may be performed by producing the compound (1) and the compound (2) respectively and then mixing these compounds at a predetermined ratio, or mixing raw materials of the compound (1) and the compound (2) at a predetermined ratio and then performing epoxidation, as described above.

Hereinafter, the method for producing the compound (1) and the method for producing the compound (2) are described respectively.

<Method for Producing Compound (2)>

The method for producing the compound (2) is not particularly limited, and examples include the following method.

When a bisphenol compound as a raw material of the epoxy compound is produced, aromatic alcohols having different structures from each other respectively represented by formula (3) and formula (4) (hereinafter, sometimes referred to as "aromatic alcohol (3)" and "aromatic alcohol (4)") are reacted at a predetermined ratio, to provide a bisphenol compound represented by formula (5), as an objective compound. Here, a bisphenol compound of formula (6), resulting from the reaction of such compounds (3), and a bisphenol compound of formula (7), resulting from the reaction of such compounds (4), are also obtained. A composition including the bisphenol compound represented by the formula (5), the bisphenol compound represented by the formula (6), and the bisphenol compound represented by the formula (7) is hereinafter sometimes referred to as "bisphenol composition (A)". The method for epoxidation with this bisphenol composition (A) is described below.

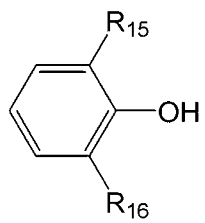

・・・(3)

In the general formula (3), $R_{15}$ and $R_{16}$ are each independently selected from the group consisting of a hydrogen atom and a substituted or unsubstituted alkyl group having 1 to 5 carbon atoms. The alkyl group may be branched, and $R_{15}$ and $R_{16}$ are each preferably a methyl group, an ethyl group, a propyl group, or an isopropyl group, and most preferably a methyl group.

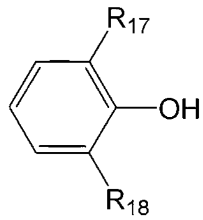

・・・(4)

In the general formula (4), $R^{17}$ and $R^{18}$ are each independently selected from the group consisting of a hydrogen atom and a substituted or unsubstituted alkyl group having 1 to 5 carbon atoms. The alkyl group may be branched, and $R^{17}$ and $R^{18}$ are each preferably a methyl group, an ethyl group, a propyl group, or an isopropyl group, and most preferably a methyl group, provided that a case where a combination of $R^{17}$ and $R^{18}$ is the same as a combination of $R^{15}$ and $R^{16}$, namely a case where the aromatic alcohol (4) is the same as the aromatic alcohol (3), is excluded.

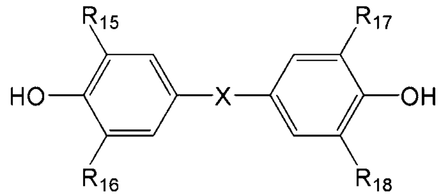

・・・(5)

In the general formula (5), $R_{15}$ to $R_{18}$ are the same as the modes of the formula (3) and the formula (4), and X is the same as the mode in the formula (1). The same also applies to a preferred mode of each of $R_{15}$ to $R_{18}$, and X.

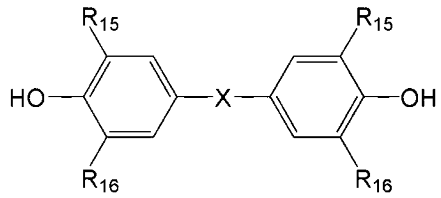

・・・(6)

In the general formula (6), X is the same as the mode in the formula (1), and $R_{15}$ and $R_{16}$ are the same as the mode in the formula (3). The same also applies to a preferred mode of each of $R_{15}$ and $R_{16}$, and X.

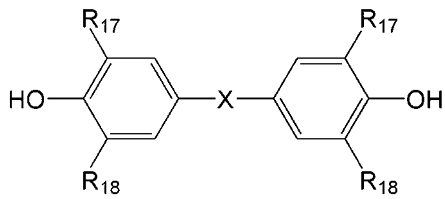

・・・(7)

In the general formula (7), X is the same as the mode in the formula (1), and $R^{17}$ and $R^{18}$ are the same as the mode in the formula (4). The same also applies to a preferred mode of each of $R_{17}$ and $R_{18}$, and X.

The method for obtaining the bisphenol composition (A) differs depending on the type of the linking group X formed. In a case where the linking group X formed is a direct bond (single bond), there is a method which includes reacting an aromatic alcohol in the presence of potassium hydroxide and oxygen. In a case where the linking group X is $-SO_2-$, there is a method which includes reacting sulfuric acid and an aromatic alcohol with naphthalenedisulfonic acid as a catalyst. In a case where the linking group X is $-C(CF_3)_2-$, there is a method which includes reacting hexafluoroacetone and an aromatic alcohol with hydrogen fluoride as a catalyst. In a case where the linking group X is - O-, there is a method which includes reacting a dihydric aromatic alcohol with an arylsulfonic acid as a catalyst. In a case where the linking group X is -S-, there is a method which includes reacting sulfur chloride and an aromatic alcohol with formamide as a catalyst. In a case where the linking group X is -CO-, there is a method which includes reacting an aromatic alcohol having carboxylic acid and an aromatic alcohol with methanesulfonic acid serving as a catalyst and also a solvent. In a case where the linking group X is a divalent hydrocarbon group, there is a method with ketone or aldehyde and acid. A method for forming a divalent hydrocarbon group as the linking group X, namely a method with ketone or aldehyde and acid, is preferred from the viewpoint of suitably providing the bisphenol C-type diglycidyl ether of the present embodiment.

The reaction of formation of divalent hydrocarbon as X, as one example of the generation reaction of bisphenol, is performed according to the following reaction general formula (8).

In the present invention, a raw material aromatic alcohol and a raw material ketone or aldehyde are selected and used so that at least bisphenol is generated in such bisphenol generation reaction.

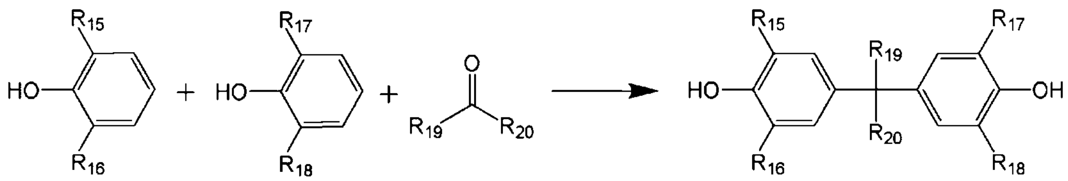

··· (8)

In the Formula, $R_{15}$ and $R_{16}$ are the same as the mode in the formula (3), and $R_{17}$ and $R_{18}$ are the same as the mode in the formula (4). $R_{19}$ and $R_{20}$ are each independently a hydrogen atom, or a substituted or unsubstituted alkyl group having 1 to 12 carbon atoms.

Examples of $R_{19}$ and $R_{20}$ include a hydrogen atom, a methyl group, an ethyl group, a n-propyl group, an i-propyl group, a n-butyl group, an i-butyl group, a t-butyl group, a n-pentyl group, an i-pentyl group, a n-hexyl group, a n-heptyl group, a n-octyl group, a 2-ethylhexyl group, a n-nonyl group, a n-decyl group, a n-undecyl group, a n-dodecyl group, and the like.

Specific examples of the ketone or aldehyde having substituents being $R_{19}$ and $R_{20}$ include aldehyde compounds such as formaldehyde, acetaldehyde, propionaldehyde, butylaldehyde, pentylaldehyde, hexylaldehyde, heptylaldehyde, octylaldehyde, nonylaldehyde, decylaldehyde, undecylaldehyde, and dodecylaldehyde; ketone compounds such as acetone, butanone, pentanone, hexanone, heptanone, octanone, nonanone, decanone, undecanone, and dodecanone; and the like, and acetone is preferably used.

Hereinafter, the method for producing the bisphenol composition (A) is described.

The reaction for condensation of an aromatic alcohol and a ketone or aldehyde leads to multimerization of the ketone or aldehyde at a lower molar ratio of the aromatic alcohol with respect to the ketone or aldehyde, whereas it leads to loss of an unreacted aromatic alcohol at a higher molar ratio thereof. Thus, the molar ratio of the aromatic alcohol with respect to the ketone or aldehyde is preferably 1.5 or more, more preferably 1.6 or more, further preferably 1.7 or more, and the molar ratio is preferably 15 or less, more preferably 10 or less, and further preferably 8 or less.

The method for feeding the ketone and aldehyde, which can be used here, is a method including collectively feeding the ketone and aldehyde or a method including separately feeding the ketone and aldehyde. The reaction of generation of the bisphenol composition (A) is exothermic reaction, and therefore a method including separately feeding the ketone and aldehyde, for example gradually adding the ketone and aldehyde, is preferred.

(Acid Catalyst)

Examples of the acid catalyst used for production of the bisphenol composition (A) include sulfuric acid, hydrochloric acid, hydrogen chloride gas, phosphoric acid, aromatic sulfonic acids such as p-toluenesulfonic acid, aliphatic sulfonic acids such as methanesulfonic acid, and the like.

In a case where the molar ratio of the acid catalyst with respect to the ketone or aldehyde used for condensation ((number of moles of acid catalyst/number of moles of ketone) or (number of moles of acid catalyst/number of moles of aldehyde)) is low, the acid catalyst is diluted with water as a by-product along with progression of the condensation reaction and the reaction is time-consuming. In a case where the molar ratio is high, multimerization of the ketone or aldehyde may progress. Thus, the molar ratio of the acid catalyst with respect to the ketone or aldehyde used for condensation is preferably 0.01 or more, more preferably 0.05 or more, further preferably 0.1 or more, and preferably 10 or less, more preferably 8 or less, and further preferably 5 or less.

The acid catalyst is preferably any one selected from the group consisting of sulfuric acid, hydrochloric acid, hydrogen chloride gas, phosphoric acid, aromatic sulfonic acids such as p-toluenesulfonic acid, aliphatic sulfonic acids such as methanesulfonic acid, and the like.

In a case where the molar ratio of hydrogen chloride with respect to the ketone or aldehyde used in the reaction ((number of moles of hydrogen chloride/number of moles of ketone) or (number of moles of hydrogen chloride/number of moles of aldehyde)) is low, hydrogen chloride is diluted with water as a by-product during the condensation reaction and a long reaction time is required. In a case where the molar ratio is high, multimerization of the ketone or aldehyde may progress. Thus, the molar ratio of hydrogen chloride with respect to the ketone or aldehyde is preferably 0.01 or more, more preferably 0.05 or more, further preferably 0.1 or more, and preferably 10 or less, more preferably 8 or less, and further

preferably 5 or less.

Sulfuric acid is represented by chemical formula $H_2SO_4$ and is an acidic liquid. In general, sulfuric acid is used as an aqueous sulfuric acid solution obtained by dilution with water and is called concentrated sulfuric acid or diluted sulfuric acid depending on the concentration. For example, diluted sulfuric acid is an aqueous sulfuric acid solution having a mass concentration of less than 90% by mass.

In a case where the concentration of sulfuric acid used (concentration of aqueous sulfuric acid solution) is low, the amount of water is large, and therefore the generation reaction of the bisphenol composition (A) may hardly progress, to elongate the reaction time for production of the bisphenol composition (A) and make it difficult to efficiently produce bisphenol. Therefore, the concentration of sulfuric acid used is preferably 70% by mass or more, more preferably 75% by mass or more, and further preferably 80% by mass or more. The upper limit of the concentration of sulfuric acid used is usually 99.5% by mass or less or 99% by mass or less.

(Thiol)

A thiol can be used as a co-catalyst in the reaction for condensation of the ketone or aldehyde and the aromatic alcohol in production of the bisphenol composition (A).

Examples of the thiol used as the co-catalyst include mercaptocarboxylic acids such as mercaptoacetic acid, thioglycolic acid, 2-mercaptopropionic acid, 4-mercaptopropionic acid, and 4-mercaptobutyric acid; alkyl thiols such as methylmercaptan, ethylmercaptan, propylmercaptan, butylmercaptan, pentylmercaptan, hexylmercaptan, heptylmercaptan, octylmercaptan, nonylmercaptan, decylmercaptan (decanethiol), undecylmercaptan (undecanethiol), dodecylmercaptan (dodecanethiol), tridecylmercaptan, tetradecylmercaptan, and pentadecylmercaptan; aryl thiols such as mercaptophenol; and the like.

If the molar ratio of the thiol co-catalyst with respect to the ketone or aldehyde used for condensation ((number of moles of thiol co-catalyst/number of moles of ketone) or (number of moles of thiol co-catalyst/number of moles of aldehyde)) is low, the effect of improvement in reaction selectivity of the bisphenol composition (A) by use of the thiol co-catalyst is not obtained. If the molar ratio is high, the quality may deteriorate due to incorporation into the bisphenol composition (A). Thus, the molar ratio of the thiol co-catalyst relative to the ketone or aldehyde is preferably 0.001 or more, more preferably 0.005 or more, further preferably 0.01 or more, and preferably 1 or less, more preferably 0.5 or less, and further preferably 0.1 or less.

The thiol co-catalyst is preferably mixed with the ketone or aldehyde in advance and then subjected to the reaction. The method for mixing the thiol and the ketone or aldehyde may be mixing of the ketone or aldehyde with the thiol, or mixing of the thiol with the ketone or aldehyde. The method for mixing a mixed liquid of the thiol and the ketone or aldehyde, and the acid catalyst may be mixing of the acid catalyst with the mixed liquid of the thiol and the ketone or aldehyde, or mixing of the mixed liquid of the thiol and the ketone or aldehyde with the acid catalyst, and is preferably mixing of the mixed liquid of the thiol and the ketone or aldehyde with the acid catalyst. Furthermore, it is more preferable to feed the acid catalyst and the aromatic alcohol to a reaction tank and then feed the mixed liquid of the thiol and the ketone or aldehyde to the reaction tank.

(Organic Solvent)

An organic solvent is usually used in order to dissolve or disperse the generating bisphenol composition (A) in production of the bisphenol composition (A).

The organic solvent is not particularly limited as long as it does not inhibit the generation reaction of the bisphenol composition (A), and examples include aromatic hydrocarbon, aliphatic alcohol, and aliphatic hydrocarbon. Here, the aromatic alcohol serving as a substrate and the bisphenol composition (A) as a product are excluded from the organic solvent. These solvents may be used singly or in combination of two or more.

Examples of the aromatic hydrocarbon include benzene, toluene, xylene, ethylbenzene, diethylbenzene, isopropylbenzene, mesitylene, and the like. These solvents may be used singly or in combination of two or more. The aromatic hydrocarbon can be used for production of the bisphenol composition (A), and then recovered and purified by distillation or the like and thus reused. In a case where the aromatic hydrocarbon is recycled, one having a low boiling point is preferred. One preferred aromatic hydrocarbon is toluene.

The aliphatic alcohol is an alkyl alcohol in which an alkyl group and a hydroxyl group are bound. The aliphatic alcohol may be a monohydric aliphatic alcohol in which an alkyl group and one hydroxyl group are bound, or a polyhydric aliphatic alcohol in which an alkyl group and two or more hydroxyl groups are bound. The alkyl group may be straight or branched, and may be unsubstituted, or some of the hydrogen atoms of the alkyl group may be each substituted with an oxygen atom.

The number of carbon atoms in the aliphatic alcohol is preferably 12 or less, and more preferably 8 or less because an increase in the number of the carbon atoms results in an increase in lipophilicity, hardly allows for mixing with

sulfuric acid, and hardly allows for generation of monoalkyl sulfate described later.

The aliphatic alcohol is preferably an alcohol in which an alkyl group and one hydroxyl group are bound, more preferably an alcohol in which an alkyl group having 1 to 8 carbon atoms and one hydroxyl group are bound, and further preferably an alcohol in which an alkyl group having 1 to 5 carbon atoms and one hydroxyl group are bound.

Specific examples of the aliphatic alcohol include methanol, ethanol, n-propanol, i-propanol, n-butanol, i-butanol, t-butanol, n-pentanol, i-pentanol, n-hexanol, n-heptanol, n-octanol, n-nonanol, n-decanol, n-undecanol, n-dodecanol, ethylene glycol, diethylene glycol, triethylene glycol, and the like. One preferred aliphatic alcohol is methanol.

Examples of the aliphatic hydrocarbon include straight hydrocarbons each having 5 to 18 carbon atoms, such as n-pentane, n-hexane, n-heptane and n-octane; branched hydrocarbons each having 5 to 18 carbon atoms, such as isooctane; cyclic hydrocarbons each having 5 to 18 carbon atoms, such as cyclohexane, cyclooctane and methylcyclohexane; and the like.

If the mass ratio of the organic solvent with respect to the ketone or aldehyde used for condensation ((mass of ketone/mass of organic solvent) or (mass of aldehyde/mass of organic solvent)) is too high, the ketone or aldehyde and the aromatic alcohol are hardly reacted and a long time is taken for the reaction. If the mass ratio is too low, multimerization of the ketone or aldehyde may be promoted to solidify the generating bisphenol composition (A). Thus, the mass ratio of the organic solvent with respect to the ketone or aldehyde during loading is preferably 0.5 or more, more preferably 1 or more, and is preferably 100 or less, and more preferably 50 or less.

The bisphenol composition (A) is more hardly decomposed if the generating bisphenol composition (A) is dispersed in the organic solvent without being completely dissolved. A solvent lower in solubility of the bisphenol composition (A) is preferably used because the loss during recovery of the bisphenol composition (A) from a reaction liquid (for example, loss into a filtrate during crystallization) after completion of the reaction can be reduced. Examples of the solvent lower in solubility of the bisphenol composition (A) include aromatic hydrocarbon. Therefore, the organic solvent preferably includes aromatic hydrocarbon as a main component, and the organic solvent includes more preferably 55% by mass or more, more preferably 70% by mass or more, and further preferably 80% by mass or more of aromatic hydrocarbon.

In a case where the acid catalyst includes sulfuric acid, the organic solvent includes the aliphatic alcohol, thus sulfuric acid and the aliphatic alcohol are reacted to generate monoalkyl sulfate and the effect of enabling catalyst action to be obtained also by this monoalkyl sulfate is obtained.

Therefore, in a case where the acid catalyst includes sulfuric acid, the organic solvent is preferably an organic solvent containing the aliphatic alcohol. The aliphatic alcohol is preferably an alkyl alcohol having 8 or less carbon atoms because an increase in the number of carbon atoms results in an increase in lipophilicity, hardly allows for mixing with sulfuric acid, and hardly allows for generation of monoalkyl sulfate. Thus, sulfuric acid and the aliphatic alcohol are reacted to generate monoalkyl sulfate, thereby enabling the acid strength of the acid catalyst to be controlled and enabling condensation (multimerization) and coloration of the ketone or aldehyde as a raw material to be suppressed. Therefore, the bisphenol composition (A), in which generation of a by-product is suppressed and coloration is reduced, can be simply and efficiently produced.

In a case where sulfuric acid and the aliphatic alcohol are reacted to generate monoalkyl sulfate and the catalyst action is also utilized, a low molar ratio of the aliphatic alcohol with respect to sulfuric acid (number of moles of aliphatic alcohol/number of moles of sulfuric acid) causes remarkable condensation (multimerization) and coloration of the ketone or aldehyde as a raw material. A high molar ratio causes a reduction in sulfuric acid concentration, to delay the reaction. Thus, the molar ratio of the aliphatic alcohol with respect to sulfuric acid is preferably 0.01 or more, more preferably 0.05 or more, further preferably 0.1 or more, and preferably 10 or less, more preferably 5 or less, and further preferably 3 or less.

From the foregoing, the organic solvent can be, for example, one including the aromatic hydrocarbon and the aliphatic alcohol. The organic solvent can include 1 to 95% by mass of the aromatic hydrocarbon and 0.1 to 10% by mass of the aliphatic alcohol.

(Method for Preparing Reaction Liquid)

The method for preparing the reaction liquid is not particularly limited, and examples include a method including feeding the acid catalyst to a mixed liquid in which the aromatic alcohol, the organic solvent, and the ketone or aldehyde are mixed, and a method including feeding the ketone or aldehyde to a mixed liquid in which the acid catalyst, the aromatic alcohol, and the organic solvent are mixed.

It is preferable for suppression of multimerization due to self-condensation of the ketone or aldehyde to mix a solution containing the aromatic alcohol, the acid catalyst and the organic solvent, and a solution containing the ketone or aldehyde. In this case, the solution containing the ketone or aldehyde may be a solution containing the ketone or aldehyde singly, or a solution containing the thiol and/or the organic solvent. The solution containing the ketone or aldehyde preferably contains the thiol.

The aromatic alcohol is required to include two different aromatic alcohols (3) and (4), for example, a bisphenol

(5A) of the present embodiment is obtained in a case where the content of xylenol with respect to ortho-cresol is 0.01%, preferably 0.02%, and more preferably 0.03%, and any bisphenol compound represented by the following formula (5A) and formula (5B) is obtained in a case where the content of phenol with respect to ortho-cresol is 0.01%, preferably 0.02%, and more preferably 0.03%.

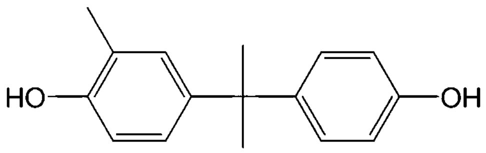

・・・(5A)

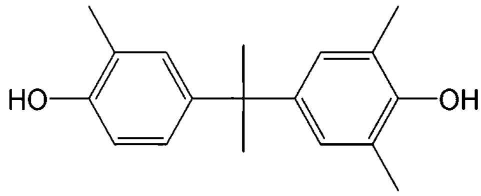

・・・(5B)

(Reaction Conditions)

The generation reaction of the bisphenol composition (A) is a condensation reaction, and a too high reaction temperature of the generation reaction causes progression of oxidative decomposition of the thiol, and a too low reaction temperature causes elongation of the time taken for the reaction. Accordingly, the reaction temperature is preferably 0°C or more and 50°C or less.

The reaction time of the generation reaction preferably falls within 30 hours, more preferably falls within 25 hours, and further preferably falls within 20 hours because a too long reaction time thereof causes decomposition of the generated bisphenol composition (A). The lower limit of the reaction time is usually 0.5 hours or more. Water in an amount equal to or more than that of sulfuric acid used or an aqueous sodium hydroxide solution allowing the sulfuric acid concentration to be 45% by mass or less can be added to reduce the sulfuric acid concentration, thereby terminating the reaction.

(Purification)

A bisphenol composition (A) product obtained by the generation reaction of the bisphenol composition (A) can be purified by an ordinary method. For example, such purification can be made by a simple procedure such as crystallization or column chromatography. Specifically, after the condensation reaction, the reaction liquid is separated to provide an organic phase, and the organic phase is washed with water or brine, and further, if necessary, neutralized and washed with sodium bicarbonate water or the like. Next, the organic phase after washing is cooled for crystallization. In a case where a large amount of the aromatic alcohol is used, an excess amount of the aromatic alcohol is distilled off by distillation before the crystallization, and then the crystallization is performed.

In the present embodiment, the bisphenol compound (5) as a by-product in the generation reaction system of the bisphenol composition (A) is allowed to remain, thereby providing the bisphenol composition (A) which includes the bisphenol compound (5). Therefore, purification conditions are adjusted so that, for example, crystallization, suspension washing, and sprinkling washing are appropriately combined and performed in the purification method of the bisphenol product to allow a predetermined amount of the bisphenol compound (5) to remain in the bisphenol product purified.

(One Example of Purification Step)

As one example of a suitable purification step for the present invention, a method is described below, which includes washing the bisphenol product (A) obtained by the condensation reaction in a washing step and then precipitating and purifying the bisphenol product by crystallization in a crystallization step.

In this case, after the condensation reaction, the organic phase containing the bisphenol composition (A) obtained from the reaction liquid is washed with desalinated water, and the organic phase after washing is cooled for crystallization. Such washing is performed plural times as follows. Such crystallization may also be performed plural times.

(Washing Step)

In the washing step, at least the following first step and second step are performed.

First step: mixing an organic phase (O1) containing the bisphenol composition (A) obtained in the reaction step, and desalinated water, thereafter separating the phase into an organic phase (O2) containing the bisphenol composition (A), and an aqueous phase (W1), and removing the aqueous phase (W1), to obtain the organic phase (O2) containing the bisphenol composition (A).

Second step: mixing the organic phase (O2) containing the bisphenol composition (A) obtained in the first step, and desalinated water, thereafter separating the phase into an organic phase (O3) containing the bisphenol composition (A), and an aqueous phase (W2), and removing the aqueous phase (W2), to obtain the organic phase (O3) containing the bisphenol composition (A).

The first step is preferably performed so that the pH of the aqueous phase (W1) is 8.5 or more. The second step is preferably performed so that the electrical conductivity of the aqueous phase (W2) is 10 μS/cm.

The desalinated water refers to water having an electrical conductivity of 1.5 μS/cm or less, such as water subjected to an ion-exchange treatment, or pure water.

The measurement temperature of the aqueous phase (W1) is preferably room temperature (20 to 30°C), for example, preferably 25°C.

In a case where the pH of the aqueous phase is lower than 7, washing with a basic substance such as sodium hydroxide or sodium hydrogen carbonate can be performed, and washing with water can be performed again. The organic phase obtained after washing with a basic substance is again washed with water so that the pH of the aqueous phase is 8.5 or more. If the basicity of the aqueous phase (W1) is weak (the pH is low), the washing effect is low, and therefore the pH is preferably 8.5 or more, and more preferably 9 or more. In this regard, if the basicity of the aqueous phase (W1) is strong (the pH is high), the bisphenol composition (A) is a bisphenol salt to result in an increase in amount of loss due to washing with water, and thus the upper limit of the pH of the aqueous phase (W1) is usually 14 or less, preferably 13 or less, and more preferably 12 or less.

The measurement temperature of the electrical conductivity of the aqueous phase (W2) in the second step is preferably room temperature (20 to 30°C), for example, preferably 25°C. The electrical conductivity of the aqueous phase (W2) in the second step is preferably 10 μS/cm or less, more preferably 9 μS/cm or less, and further preferably 8 μS/cm or less.

In the washing step, preferably, first, the organic phase containing the bisphenol composition (A) is washed with water and thus the pH of the resulting aqueous phase reaches 8.5 or more corresponding to basicity; thereafter, washing with water is, if necessary, repeated and thus the electrical conductivity of the resulting aqueous phase reaches 10 μS/cm or less, and then the resultant is subjected to a crystallization step.

Washing with desalinated water can be performed so that the pH of the aqueous phase (W1) in the first step is equal to or more than the lower limit and the electrical conductivity of the aqueous phase (W2) in the second step is equal to or less than the upper limit, thereby highly removing a by-product in the resulting bisphenol, and/or impurities such as the remaining catalyst and/or the remaining thiol, to provide the bisphenol composition (A) which is favorable in color phase.

The temperature in the washing step is preferably 90°C or less, in particular 85°C or less, and preferably 50°C or more, in particular 55°C or more so that the bisphenol composition (A) is efficiently precipitated by cooling in a crystallization step described later without evaporation of any solvent. The washing time for one time (the time for adding desalinated water to the organic phase and mixing the resultant) is usually about 1 to 120 minutes.

(Crystallization Step)

The colling temperature in the crystallization step is lower than the temperature of the organic phase (O3) obtained in the washing step, by 10 to 120°C, and is preferably 40°C or less, in particular 30°C or less, and preferably -20°C or more, in particular -10°C or more. The organic phase (O3) after washing can be cooled to such a temperature to efficiently precipitate the bisphenol composition (A).

The bisphenol composition (A) precipitated in the crystallization step can be recovered by solid-liquid separation with filtration, centrifugation, decantation, and the like.

Even in a case where the washing step and the crystallization step are performed, purification conditions are preferably controlled so that the bisphenol compound (5) remains at a predetermined proportion in the bisphenol composition (A) obtained after purification.

<Method for Producing Compound (1)>

The method for producing the compound (1) (bisphenol C-type diglycidyl ether represented by the formula (1)) can be, for example, the reaction of bisphenol C and/or the bisphenol composition (A) obtained by the above method with epihalohydrin in the presence of an alkali, or epoxidation by allylation of bisphenol C and then oxidation of an olefin moiety thereof.

The bisphenol C used as a raw material in the method for producing the compound (1) is the bisphenol composition (A) obtained by the above method and/or a bisphenol compound represented by the following formula (9). In the present invention, the structure represented by the following formula (9) is defined as "bisphenol C".

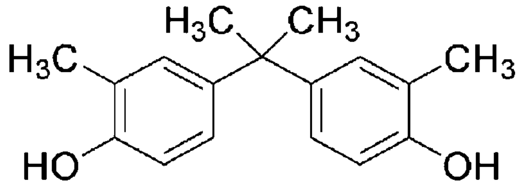

・・・(9)

The reaction step of reacting the bisphenol compound represented by the formula (9) with epihalohydrin in the presence of an alkali is not particularly limited and is preferably a reaction step of reacting the bisphenol compound represented by the formula (9) with epihalohydrin by a one-stage process.

Hereinafter, this reaction step by a one-stage process is described in detail.

(Reaction Step by One-Stage Process)

Specific examples of the production method by a one-stage process include a method for production by reacting 1 mol of a hydroxyl group in the bisphenol compound represented by the formula (9) with epihalohydrin at a proportion of usually 1.00 to 20.0 mol, preferably 1.50 to 15.0 mol, more preferably 2.0 to 12.0 mol, and further preferably 4.0 to 10.0 mol. If the amount of epihalohydrin used is small, generation of a polymer leads to not only an increase in viscosity, but also deterioration of dielectric characteristics and heat resistance, and if the amount of epihalohydrin is too large, economic performance deteriorates.

More specifically, the bisphenol compound represented by the formula (9) and epihalohydrin such as epichlorohydrin are mixed, and reacted in the presence of an alkali. A solid or aqueous solution of an alkali metal hydroxide is preferably used as the alkali to perform the reaction. The reaction can be performed under ordinary pressure or under reduced pressure, and the reaction temperature is usually 20 to 150°C in the case of the reaction under ordinary pressure or usually 30 to 80°C in the case of the reaction under reduced pressure. The reaction is performed under dewatering by a method including cooling vapor obtained by volatilization due to azeotropy of the reaction liquid, if necessary, under retention of a predetermined temperature, to provide a condensate liquid, subjecting the condensate liquid to oil/water separation, and returning the oily content from which moisture is removed, to the reaction system. The alkali metal hydroxide is preferably intermittently or continuously added to the reaction system in small batches over 0.1 to 10 hours in order to prevent a rapid reaction. The whole reaction time is usually 1 to 15 hours.

After completion of the reaction, an insoluble salt as a by-product is removed by separation with filtration or by washing with water and then the unreacted epihalohydrin is removed by distillation under reduced pressure from the reaction liquid including bisphenol C-type diglycidyl ether as an objective product, thereby providing an objective bisphenol C-type diglycidyl ether.

The epihalohydrin used for this reaction is preferably epichlorohydrin or epibromohydrin. The alkali metal hydroxide used here is preferably sodium hydroxide or potassium hydroxide.

A catalyst, for example, a quaternary ammonium salt such as tetramethylammonium chloride or tetraethylammonium bromide; a tertiary amine such as benzyldimethylamine or 2,4,6-tris(dimethylaminomethyl)phenol; an imidazole compound such as 2-ethyl-4-methylimidazole or 2-phenylimidazole; a phosphonium salt such as ethyltriphenylphosphonium iodide; a phosphine compound such as triphenylphosphine; or the like may be used in the reaction.

Furthermore, an inert organic solvent, for example, an alcohol compound such as ethanol, isopropyl alcohol, or ethylene glycol; a ketone compound such as acetone or methyl ethyl ketone; an ether compound such as dioxane; a glycol ether compound such as methoxypropanol; an aprotic polar solvent such as dimethylsulfoxide or dimethylformamide; or the like may be used in the reaction.

In view of the amount of saponifiable halogen in the bisphenol C-type diglycidyl ether obtained as described above, the purified bisphenol C-type diglycidyl ether in which the amount of saponifiable halogen is sufficiently reduced by re-treatment can be obtained. In this case, the purified bisphenol C-type diglycidyl ether can be obtained by a one-stage

process by re-dissolving a crude bisphenol C-type diglycidyl ether obtained by the reaction, in an inert organic solvent such as isopropyl alcohol, methyl ethyl ketone, methyl isobutyl ketone, toluene, xylene, dioxane, methoxypropanol, or dimethylsulfoxide, adding an alkali metal hydroxide in the form of a solid or aqueous solution to perform recyclization reaction at a temperature of about 20 to 120°C for 0.5 to 8 hours, then removing an excess amount of the alkali metal hydroxide and/or a by-product by a method such as washing with water, and furthermore removing the organic solvent by distillation under reduced pressure.

In a case where the bisphenol C-type diglycidyl ether represented by the formula (1) is produced by a one-stage process, at least the bisphenol compound represented by the formula (9) is used as a raw material, and a polyhydric hydroxy compound other than the bisphenol compound represented by the formula (9) (herein, sometimes referred to as "any other polyhydric hydroxy compound") may be used in combination to produce a mixture of the bisphenol C-type diglycidyl ether of the formula (1) and any other epoxy resin. Here, the proportion of the bisphenol compound represented by the formula (9) based on the total amount of the entire polyhydric hydroxy compound used as a raw material is preferably 72% by mol or more, more preferably 80% by mol or more, further preferably 90% by mol or more, and particularly preferably 95% by mol or more from the viewpoint that the effects of the present invention are enhanced. The upper limit of the proportion is 100% by mol, and the proportion is most preferably 100% by mol. Herein, the "polyhydric hydroxy compound" is a collective term of polyhydric phenol compounds and polyhydric alcohols.

Examples of such any other polyhydric hydroxy compound include various polyhydric phenol compounds such as bisphenol A, bisphenol AF, bisphenol F, bisphenol S, bisphenol AD, hydroquinone, resorcinol, methylresorcinol, biphenol, tetramethylbiphenol, dihydroxynaphthalene, dihydroxydiphenyl ether, a thiodiphenol compound, a phenol novolac resin, a cresol novolac resin, a phenol aralkyl resin, a biphenylaralkyl resin, a naphthol aralkyl resin, a terpene phenol resin, a dicyclopentadiene phenol resin, a bisphenol A novolac resin, a naphthol novolac resin, brominated bisphenol A, and a brominated phenol novolac resin, various phenol resins, for example, polyhydric phenol resins obtained by the condensation reaction of various phenol compounds and various aldehyde compounds such as benzaldehyde, hydroxybenzaldehyde, crotonaldehyde, and glyoxal, polyhydric phenol resins obtained by the condensation reaction of xylene resins and phenol compounds, and co-condensed resins of heavy oil or pitch compounds, phenol compounds and formaldehyde compounds, and linear aliphatic diol compounds such as ethylene glycol, trimethylene glycol, propylene glycol, 1,3-butanediol, 1,4-butanediol, 1,3-pentanediol, 1,4-pentanediol, 1,5-pentanediol and 1,6-hexanediol; cyclic aliphatic diol compounds such as cyclohexanediol and cyclodecanediol; and polyalkylene ether glycol compounds such as polyethylene ether glycol, polyoxytrimethylene ether glycol and polypropylene ether glycol. Among them, preferred examples include phenol novolac resins, phenol aralkyl resins, polyhydric phenol resins obtained by the condensation reaction of phenol and hydroxybenzaldehyde, biphenylaralkyl resins, naphthol aralkyl resins, linear aliphatic diol compounds such as ethylene glycol, trimethylene glycol, propylene glycol, 1,3-butanediol, 1,4-butanediol, 1,3-pentanediol, 1,4-pentanediol, 1,5-pentanediol and 1,6-hexanediol, cyclic aliphatic diol compounds such as cyclohexanediol and cyclodecanediol, and polyalkylene ether glycol compounds such as polyethylene ether glycol, polyoxytrimethylene ether glycol and polypropylene ether glycol.

Examples of the method for controlling the amounts of a form of n = 0 and a form of n = 1 in the formula (1) include a method including adjusting the molar ratio of the bisphenol compound represented by the formula (9) and epihalohydrin loaded as raw materials and the amount of the alkali used, in the reaction step, a method including controlling the amounts by purification and distillation, and a method in which these are combined.

Specifically, when the amount of epihalohydrin used in the reaction is increased, the content rate of the form of n = 0 can be increased, and the content rate of the form of n = 1 can be decreased. When 1 mol or more of epihalohydrin is used based on 1 mol of a phenolic hydroxyl group in the bisphenol compound represented by the formula (9) as a raw material, the content rate of the form of n = 0 can be increased, and when less than 1 mol thereof is used, the content rate of the form of n = 1 or the content rate of a component as a form of n = 2 or more can be increased.

When the amount of the alkali used in synthesis is larger than the reaction equivalent, the content rate of the form of n = 1 or the content rate of a component as a form of n = 2 or more can be increased. Further examples include a method including reacting the bisphenol compound represented by the formula (9) and epihalohydrin as raw materials, to provide a product, and then performing a distillation operation and a column chromatography operation to not only increase the content rate of the form of n = 0, but also decrease the content rate of the form of n = 1. Any reverse control thereof can also be made depending on the conditions of the distillation operation and the column chromatography operation.

[Curable Composition]

One embodiment of the present invention relates to a curable composition, and at least the above bisphenol-type diglycidyl ether composition, according to one embodiment of the present invention, and a curing agent are included. The curable composition of the present embodiment can be, if necessary, appropriately compounded with an epoxy resin other than the bisphenol-type diglycidyl ether composition of the present embodiment, and various additives such as an inorganic filler, a coupling agent, and an oxidant. The curable composition of the present embodiment can be enhanced in

handleability by compounding of the bisphenol-type diglycidyl ether composition as one embodiment of the present invention, therefore can achieve compatibility with other components and an increased amount of the filler added and can be enhanced in impregnation ability of a glass cloth, and furthermore is excellent in heat resistance and low dielectric characteristics and therefore is useful for allowing an electronic component to be finely wired, multi-layered, increased in density, and increased in frequency.

[Curing Agent]

Herein, the curing agent indicates a substance contributing to the crosslinking reaction between epoxy groups of epoxy resins and/or the chain elongation reaction of an epoxy resin. Herein, even a substance usually called "curing accelerator" is considered to be the curing agent as long as such a substance is a substance contributing to the crosslinking reaction between epoxy groups of epoxy resins and/or the chain elongation reaction of an epoxy resin.

The content of the curing agent in the curable composition of the present embodiment is preferably 0.1 to 100 parts by mass, more preferably 90 parts by mass or less, and further preferably 80 parts by mass or less in terms of solid content based on 100 parts by mass of the solid content of the bisphenol-type diglycidyl ether composition as one embodiment of the present invention.

In a case where the curable composition of the present embodiment includes any other epoxy resin described later, the mass ratio of the solid contents of the bisphenol-type diglycidyl ether composition and such any other epoxy resin is preferably 99/1 to 1/99.

In this case, the content of the curing agent in the curable composition of the present embodiment is preferably 0.1 to 100 parts by mass, more preferably 90 parts by mass or less, and further preferably 80 parts by mass or less in terms of solid content based on 100 parts by mass in total of the solid contents of the bisphenol-type diglycidyl ether composition and such any other epoxy resin.

Herein, the "solid content" means a component except for a solvent, and encompasses not only a solid epoxy resin, but also a semi-solid or viscous liquid substance. The "whole epoxy resin component" means the total of the bisphenol-type diglycidyl ether composition as one embodiment of the present invention and any other epoxy resin described later.

The curing agent used in the curable composition of the present embodiment is not particularly limited, and any curing agent commonly known as an epoxy resin curing agent can be used. Preferred examples include a phenol-based curing agent, an amide-based curing agent, an imidazole compound and an active ester-based curing agent from the viewpoint of an enhancement in heat resistance. Hereinafter, examples of the phenol-based curing agent, the amide-based curing agent, the imidazole compound, the active ester-based curing agent and any other usable curing agent are listed.

<Phenol-Based Curing Agent>

The phenol-based curing agent is preferably used in the curing agent used in the curable composition of the present embodiment from the viewpoints of enhancements in handleability of the resulting curable composition and heat resistance after curing.

Specific examples of the phenol-based curing agent include bisphenol A, bisphenol F, 4,4'-dihydroxydiphenylmethane, 4,4'-dihydroxydiphenyl ether, 1,4-bis(4-hydroxyphenoxy)benzene, 1,3-bis(4-hydroxyphenoxy)benzene, 4,4'-dihydroxydiphenylsulfide, 4,4'-dihydroxydiphenyl ketone, 4,4'-dihydroxydiphenylsulfone, 4,4'-dihydroxybiphenyl, 2,2'-dihydroxybiphenyl, 10-(2,5-dihydroxyphenyl)-10H-9-oxa-10-phosphaphenanthrene-10-oxide, phenol novolac, bisphenol A novolac, o-cresol novolac, m-cresol novolac, p-cresol novolac, xylenol novolac, poly-p-hydroxystyrene, hydroquinone, resorcinol, catechol, t-butylcatechol, t-butylhydroquinone, phloroglucinol, pyrogallol, t-butylpyrogallol, allylated pyrogallol, polyallylated pyrogallol, 1,2,4-benzenetriol, 2,3,4-trihydroxybenzophenone, 1,2-dihydroxynaphthalene, 1,3-dihydroxynaphthalene, 1,4-dihydroxynaphthalene, 1,5-dihydroxynaphthalene, 1,6-dihydroxynaphthalene, 1,7-dihydroxynaphthalene, 1,8-dihydroxynaphthalene, 2,3-dihydroxynaphthalene, 2,4-dihydroxynaphthalene, 2,5-dihydroxynaphthalene, 2,6-dihydroxynaphthalene, 2,7-dihydroxynaphthalene, 2,8-dihydroxynaphthalene, an allylated product or polyallylated product of the dihydroxynaphthalene, allylated bisphenol A, allylated bisphenol F, allylated phenol novolac, allylated pyrogallol, and the like.

The phenol-based curing agents listed above may be used singly or as a mixture of two or more kinds thereof in any combination and at any ratio.

The phenol-based curing agent, when used as the curing agent, is preferably used so that the equivalent ratio of a functional group in the curing agent with respect to an epoxy group in the whole epoxy resin component in the curable composition is in a range of 0.8 to 1.5. This range is preferred because an unreacted epoxy group and a functional group in the curing agent hardly remain.

<Amide-Based Curing Agent>

The amide-based curing agent is preferably used in the curing agent used in the curable composition of the present embodiment from the viewpoint of an enhancement in heat resistance of the resulting curable composition.
Examples of the amide-based curing agent include dicyandiamide and its derivative, and a polyamide resin. The amide-based curing agent may be used singly or as a mixture of two or more kinds thereof in any combination and at any ratio.

<Imidazole Compound>

The imidazole compound (imidazole-based curing agent) is preferably used as the curing agent used in the curable composition of the present embodiment from the viewpoints of allowing the curing reaction to sufficiently progress and enhancing heat resistance.
Examples of the imidazole compound include 2-phenylimidazole, 2-ethyl-4(5)-methylimidazole, 2-phenyl-4-methylimidazole, 1-benzyl-2-methylimidazole, 1-benzyl-2-phenylimidazole, 1-cyanoethyl-2-undecylimidazole, 1-cyano-2-phenylimidazole, 1-cyanoethyl-2-undecylimidazole trimellitate, 1-cyanoethyl-2-phenylimidazolium trimellitate, 2,4-diamino-6-[2'-methylimidazolyl-(1')]-ethyl-s-triazine, 2,4-diamino-6-[2'-ethyl-4'-methylimidazolyl-(1')]-ethyl-s-triazine, a 2,4-diamino-6-[2'-methylimidazolyl-(1')]-ethyl-s-triazineisocyanuric acid adduct, a 2-phenylimidazoleisocyanuric acid adduct, 2-phenyl-4,5-dihydroxymethylimidazole, 2-phenyl-4-methyl-5-hydroxymethylimidazole, an adduct of an epoxy resin and the imidazole compound, and the like. The imidazole compound has catalyst performance and thus can also be commonly classified to be a curing accelerator described later, but is classified as the curing agent in the present invention.
These imidazole compounds listed above may be used singly or as a mixture of two or more kinds thereof in any combination and at any ratio. The imidazole compound is preferably used in a range of 0.1 to 20% by mass based on the total of the whole epoxy resin component as the solid content in the curable composition, and the imidazole compound.

<Active Ester-Based Curing Agent>

The active ester-based curing agent is preferably used as the curing agent used in the curable composition of the present embodiment from the viewpoint of allowing the resulting cured product to exhibit low water-absorption and low dielectric characteristics.
The active ester-based curing agent is not particularly limited, and a compound is commonly used which has two or more ester groups high in reaction activity, in one molecule, such as a phenol ester compound, a thiophenol ester compound, an N-hydroxyamine ester compound, and an ester compound of a heterocyclic hydroxy compound.
The active ester-based curing agent is preferably obtained by the condensation reaction of a carboxylic acid compound and/or a thiocarboxylic acid compound, and a hydroxy compound and/or a thiol compound. In particular, an active ester resin obtained from a carboxylic acid compound or its halide and a hydroxy compound is preferred and an active ester resin obtained from a carboxylic acid compound or its halide and a phenol compound and/or a naphthol compound is more preferred from the viewpoint of an enhancement in heat resistance.
Examples of the carboxylic acid compound include benzoic acid, acetic acid, succinic acid, maleic acid, itaconic acid, phthalic acid, isophthalic acid, terephthalic acid, pyromellitic acid, or any halide thereof. Examples of the phenol compound or naphthol compound include hydroquinone, resorcinol, bisphenol A, bisphenol F, bisphenol S, phenolphthalin, methylated bisphenol A, methylated bisphenol F, methylated bisphenol S, phenol, o-cresol, m-cresol, p-cresol, catechol, $\alpha$-naphthol, $\beta$-naphthol, 1,5-dihydroxynaphthalene, 1,6-dihydroxynaphthalene, 2,6-dihydroxynaphthalene, dihydroxybenzophenone, trihydroxybenzophenone, tetrahydroxybenzophenone, phloroglucine, benzenetriol, a dicyclopentadiene-phenol-addition-type resin, and the like.
The active ester resin is specifically preferably an active ester-based resin containing a dicyclopentadiene-phenol-addition structure, an active ester resin containing a naphthalene structure, an active ester resin being an acetylated product of phenol novolac, an active ester resin being a benzoylated product of phenol novolac, or the like, and, in particular, more preferably an active ester resin containing a dicyclopentadiene-phenol-addition structure or an active ester resin containing a naphthalene structure from the viewpoint that an enhancement in peel strength is excellent.
More specific examples of the active ester resin containing a dicyclopentadiene-phenol-addition structure include compounds represented by the following general formulae (I) and (II).

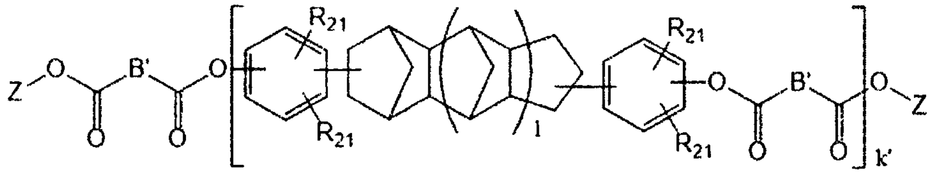

• • • (I)

In the formula (I), B' is each independently any structure moiety selected from the group consisting of structural formulae (B'-1) to (B'-6):

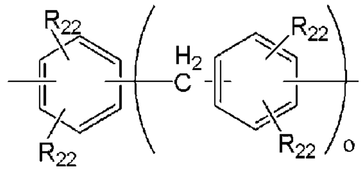

(B'-1)

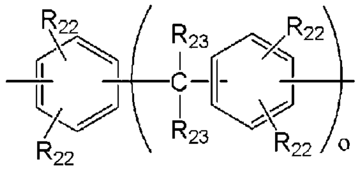

(B'-2)

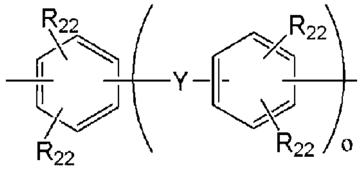

(B'-3)

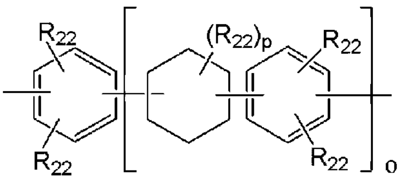

(B'-4)

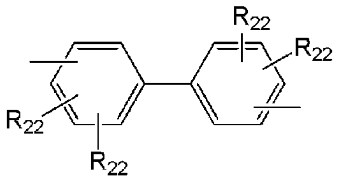

(B'-5)

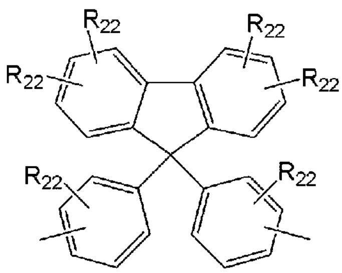

(B'-6)

in the formulae (B'-1) to (B'-6), $R^{22}$ is each independently any of a hydrogen atom, an alkyl group having 1 to 4 carbon atoms, an alkoxy group having 1 to 4 carbon atoms, a phenyl group, and an aralkyl group, $R^{23}$ is each independently

any of an alkyl group having 1 to 4 carbon atoms, an alkoxy group having 1 to 4 carbon atoms, and a phenyl group, Y is any of a straight alkylene group having 2 to 6 carbon atoms, an ether bond, a carbonyl group, a carbonyloxy group, a sulfide group, and a sulfone group, and o and p are each an integer of 1 to 4;
$R^{21}$ is each independently any of a hydrogen atom, an alkyl group having 1 to 4 carbon atoms, an alkoxy group having 1 to 4 carbon atoms, a phenyl group, and an aralkyl group, Z is a phenyl group, a naphthyl group, or a phenyl group or a naphthyl group having 1 to 3 alkyl groups each having 1 to 4 carbon atoms, on an aromatic nucleus, 1 is 0 or 1, and k' is the average of repeating units and is 0.05 to 3.5.

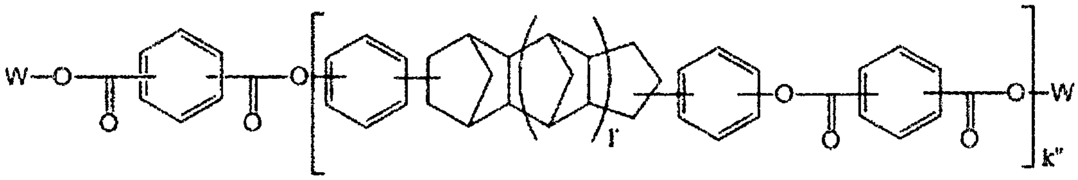

・・・( I I )

In the formula (II), W is a phenyl group or a naphthyl group, l' represents 0 or 1, and k" is the average of repeating units and is 0.05 to 3.5.

In the formula (II), R is preferably a naphthyl group, l' is preferably 0, and k" is preferably 0.25 to 1.5 from the viewpoint of allowing a cured product of the resin composition to be reduced in dielectric tangent and enhanced in heat resistance.

Polyarylate can also be used as a similar curing agent to the active ester resins represented by the general formulae (I) and (II).

Examples of a commercially available product of the active ester-based curing agent include HPC-8000-65T (an active ester curing agent containing a dicyclopentadiene structure) and HPC-8150-60T (an active ester curing agent containing a naphthalene structure in a main backbone) (which are each manufactured by DIC Corporation), and W-575 and V-575 (which are each a polyarylate having a bisphenol backbone, manufactured by UNITIKA LTD.).

These active ester-based curing agents listed above may be used singly or as a mixture of two or more kinds thereof in any combination and at any ratio. The active ester-based curing agent is preferably used so that the equivalent ratio of an active ester group in the curing agent with respect to an epoxy group in the whole epoxy resin in the curable composition is in a range of 0.2 to 2.0.

<Any Other Curing Agent>

Examples of any other curing agent than the above usable in the curable composition of the present embodiment include an amine-based curing agent (provided that tertiary amine is excluded), an acid anhydride-based curing agent, tertiary amine, an organic phosphine compound, a phosphonium salt, tetraphenylborate, organic acid hydrazide, a boron halide/amine complex, a polymercaptan-based curing agent, an isocyanate-based curing agent, a block isocyanate-based curing agent, and carbodiimide. Such any other curing agents exemplified above may be used singly or as a mixture of two or more kinds thereof in any combination and at any ratio.

[Any Other Epoxy Resin]

The curable composition of the present embodiment can include any other epoxy resin. Such any other epoxy resin can be used to fill up insufficient physical properties and enhance various physical properties.

Such any other epoxy resin is preferably one having two or more epoxy groups in its molecule, and various epoxy resins such as a bisphenol A-type epoxy resin, a bisphenol AF-type epoxy resin, a bisphenol F-type epoxy resin, a bisphenol S-type epoxy resin, a bisphenol Z-type epoxy resin, a naphthalene-type epoxy resin, a phenol novolac-type epoxy resin, a cresol novolac-type epoxy resin, a phenol aralkyl-type epoxy resin, a biphenyl-type epoxy resin, a triphenylmethane-type epoxy resin, and a dicyclopentadiene-type epoxy resin can be used. These can be used singly or as a mixture of two or more kinds thereof.

In a case where the bisphenol-type diglycidyl ether composition as one embodiment of the present invention and such any other epoxy resin are used in the curable composition of the present embodiment, the amount of compounding of such any other epoxy resin in 100% by mass of the whole epoxy resin component as the solid content is preferably 1% by mass or more, more preferably 5% by mass or more, and further preferably 10% by mass or more, and preferably 99% by mass or less, more preferably 95% by mass or less, and further preferably 90% by mass or less. When the proportion of such any other epoxy resin is equal to or more than the lower limit value, the enhancement effect of physical properties by compounding of such any other epoxy resin can be sufficiently obtained. In this regard, the proportion of such any other

epoxy resin is preferably equal to or less than the upper limit value from the viewpoint that the effect by the bisphenol C-type diglycidyl ether is sufficiently exerted and the enhancement effect of physical properties such as high heat resistance and low dielectric characteristics is obtained.

[Solvent Medium]

A solvent medium may be compounded to dilute the curable composition of the present embodiment in order to properly adjust the viscosity of the curable composition during handling in coating film formation. The solvent medium in the curable composition of the present invention is used to ensure handleability and workability during molding of the curable composition, and the amount thereof used is not particularly limited. In the present invention, the term "solvent medium" and the above term "solvent" are distinctively used depending on the usage form, but these used herein may be each independently the same or different.

Examples of the solvent medium that can be included in the curable composition of the present embodiment include ketone compounds such as acetone, methyl ethyl ketone (MEK), methyl isobutyl ketone and cyclohexanone; ester compounds such as ethyl acetate; ether compounds such as ethylene glycol monomethyl ether; amide compounds such as N,N-dimethylformamide and N,N-dimethylacetamide; alcohol compounds such as methanol and ethanol; alkane compounds such as hexane and cyclohexane; aromatic compounds such as toluene and xylene; and the like. These solvent media listed above may be used singly or as a mixture of two or more kinds thereof in any combination and at any ratio.

[Any Other Component]

The curable composition of the present embodiment may include a component other than those exemplified above (in the present invention, sometimes referred to as "any other component") for the purpose of a further enhancement in functionality. Examples of such any other component include a thermosetting resin and a photocurable resin excluding epoxy resins, a curing accelerator (provided that one encompassed in the "curing agent" is excluded), an ultraviolet inhibitor, an oxidant, a coupling agent, a plasticizer, flux, a flame retardant, a colorant, a dispersant, an emulsifier, an elasticity lowering agent, a diluent, a defoamer, an ion-trapping agent, an inorganic filler, an organic filler, and the like.

[Cured Product]

One embodiment of the present invention relates to a cured product and is formed by curing a curable composition as one embodiment of the present invention. The cured product of the present embodiment, formed by curing the bisphenol-type diglycidyl ether composition as one embodiment of the present invention with the curing agent, not only can be increased in amount of addition of a filler and enhanced in impregnation ability of a glass cloth due to attainment of a curable composition excellent in handleability, but also is excellent in high heat resistance and low dielectric characteristics, and therefore a cured product is provided which is effective for allowing an electronic part to be finely wired, multi-layered, increased in density, and increased in frequency. The "curing" mentioned here means intentional heating of the curable composition by heat, light, and/or the like, and the degree of curing may be controlled depending on desired physical properties and applications. The degree of progression of the curing reaction may correspond to complete curing or semi-curing and is not particularly limited, and the rate of the curing reaction of an epoxy group and the curing agent is usually 5 to 95%.

In a case where the curable composition as one embodiment of the present invention is cured to form the cured product of the present embodiment, the method for curing the curable composition differs depending on the components compounded in the curable composition and the amounts of compounding thereof, and examples usually include heating conditions of 80 to 280°C and 60 to 360 minutes. The heating is preferably made with a two-stage treatment including first heating at 80 to 160°C for 10 to 90 minutes and second heating at 120 to 200°C for 60 to 150 minutes, and furthermore third heating at 150 to 280°C for 60 to 120 minutes is preferably performed in the compounding system in which the glass transition temperature (Tg) exceeds the temperature of the second heating. It is preferable to thus perform the second heating and the third heating from the viewpoints of decrease in insufficient curing and decrease in remaining of the solvent medium.

When a resin semi-cured product is produced, the curing reaction of the curable composition is preferably allowed to progress to such an extent that the shape is kept by heating or the like. In a case where the curable composition includes the solvent medium, most of the solvent medium is usually removed by a procedure such as heating, pressure reduction, or air drying, and 5% by mass or less of the solvent medium may be allowed to remain in the resin semi-cured product.

[Application]

The bisphenol-type diglycidyl ether composition as one embodiment of the present invention is excellent in productivity and handleability, and excellent in heat resistance and low dielectric characteristics. The bisphenol-type diglycidyl ether composition can also allow a curable composition thereof to be enhanced in handleability and be increased in amount of addition of a filler and enhanced in compatibility with other resin components and impregnation ability of a glass cloth. Therefore, the bisphenol-type diglycidyl ether composition can be applied in various fields of adhesives, coating materials, materials for civil engineering and construction, insulation materials for electrical/electronic components, and the like, and is useful particularly for insulation casting, layering materials, sealing materials, and the like in the electrical/electronic field.
Examples of applications of the bisphenol-type diglycidyl ether composition and a curable composition including the composition include electrical/electronic components including layered plates for electrical/electronic circuits, such as multi-layer printed wiring substrates and capacitors, adhesives such as film-shaped adhesives and liquid adhesives, semiconductor sealing materials, underfill materials, interchip fills for 3D-LSI's, insulation sheets, prepregs, and heat dissipation substrates, but not limited thereto at all.
One embodiment of the present invention relates to an electrical/electronic component, and the component is formed with the curable composition as one embodiment of the present invention. Specifically, for example, a cured product of the curable composition as one embodiment of the present invention can be included. In the present invention, the "layered plate for electrical/electronic circuits" is one in which a layer including a cured product of the curable composition as one embodiment of the present invention and a conductive metal layer are stacked, and it is used as a concept also encompassing, for example, a capacitor even if not an electrical/electronic circuit, as long as it is one in which a layer including the cured product of the curable composition and a conductive metal layer are stacked. Herein, a layer formed with two or more such curable compositions may be formed in the layered plate for electrical/electronic circuits, and the curable composition as one embodiment of the present invention may be used in at least one layer. Two or more kinds of conductive metal layers may be formed.
The thickness of a layer made of the curable composition as one embodiment of the present invention in the layered plate for electrical/electronic circuits is usually about 10 to 200 μm. The thickness of the conductive metal layer is usually about 0.2 to 70 μm.

[Conductive Metal]

Examples of the conductive metal in the layered plate for electrical/electronic circuits include metals such as copper and aluminum, and alloys including these metals. Any metal foil of such a metal, or any metal layer thereof formed by plating or sputtering, can be used in the conductive metal layer in the layered plate for electrical/electronic circuits in the present embodiment.

[Method for Producing Layered Plate for Electrical/Electronic Circuits]

Examples of the method for producing the layered plate for electrical/electronic circuits in the present embodiment include the following methods.

(1) A method including impregnating an unwoven cloth, a cloth or the like using an inorganic and/or organic fiber material(s) such as a glass fiber, a polyester fiber, an aramid fiber, cellulose, and/or nanofiber cellulose with the curable composition of the present invention to provide a prepreg, providing the conductive metal layer by conductive metal foil and/or plating, then forming a circuit with a photoresist or the like, and stacking a required number of such layers to provide the layered plate.
(2) A method including using the prepreg of (1) as a core to stack a layer made of the curable composition of the present invention and the conductive metal layer on the core (one surface or both surfaces) (build-up method). The layer made of the curable composition may include an organic and/or inorganic filler(s).
(3) A method including alternately stacking only a layer made of the curable composition of the present invention and the conductive metal layer without any core to provide the layered plate for electrical/electronic circuits.

EXAMPLES

Hereinafter, the present invention is more specifically described based on Examples, but the present invention is not limited to the following Examples at all. Herein, values of various production conditions and evaluation results in the following Examples have the meanings as preferred values of the upper limit or the lower limit in embodiments of the present invention, and preferred ranges may be each a range defined by a combination of the value of the upper limit or the

lower limit and any value in the following Examples, or a combination of values in Examples.

[Raw Materials Used and the like]

The structural formulae of raw materials used in Examples and Comparative Examples below, reaction products, and the like are as follows.

· Bisphenol C-type diglycidyl ether (hereinafter, abbreviated as "compound (1-1)")

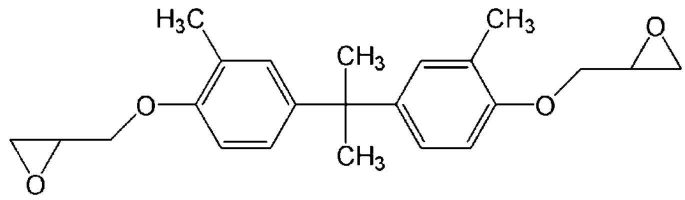

・・・(1－1)

· Monomethylbisphenol A-type diglycidyl ether (hereinafter, abbreviated as "MMBPA or compound (2-1)")

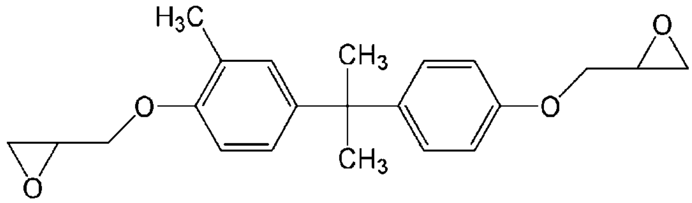

・・・(2－1)

· Trimethylbisphenol A-type diglycidyl ether (hereinafter, abbreviated as "compound (3-1)")

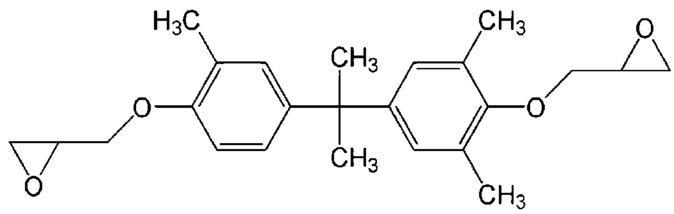

・・・(3－1)

· Phenol (hereinafter, abbreviated as "compound (4-1)")

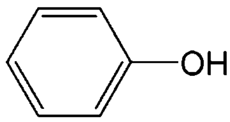

・・・(4－1)

· Ortho-cresol (hereinafter, abbreviated as "compound (5-1)")

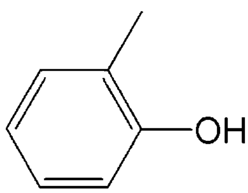

・・・(5－1)

· 2,6-Xylenol (hereinafter, abbreviated as "compound (6-1)")

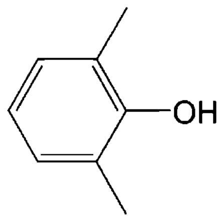

· · · (6-1)

· Monomethylbisphenol A (hereinafter, abbreviated as "compound (7-1)")

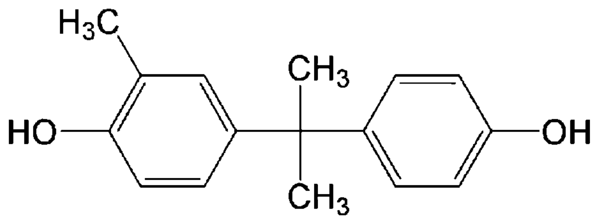

· · · (7-1)

· Trimethylbisphenol A (hereinafter, abbreviated as "compound (8-1)")

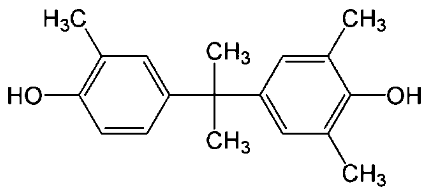

· · · (8-1)

· Tetramethylbisphenol A (hereinafter, abbreviated as "compound (9-1)")

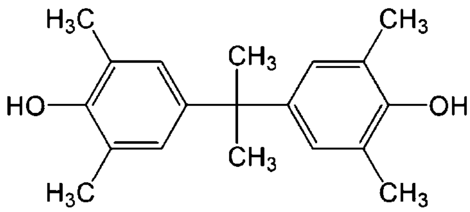

· · · (9-1)

· Tetramethylbisphenol A (hereinafter, abbreviated as "compound (10-1)")

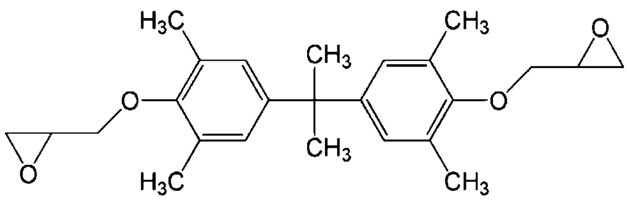

· · · (10-1)

· Bisphenol A-type diglycidyl ether (hereinafter, abbreviated as "compound (11-1)")

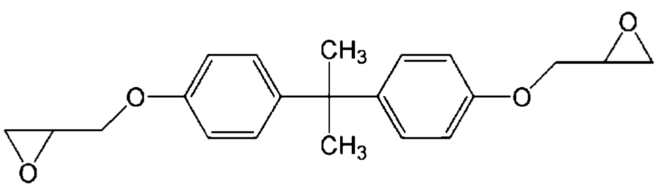

· · · (11-1)

· Bisphenol AF-type diglycidyl ether (hereinafter, abbreviated as "compound (12-1)")

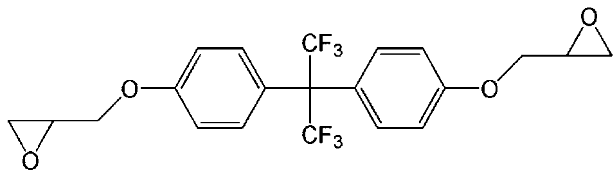

・・・(12−1)

[Methods for Evaluating Physical Properties-Characteristics]

[Measurement-evaluation Methods]

Measurement-evaluation methods of physical properties and the like of bisphenol-type diglycidyl ether compositions obtained in the following Examples and Comparative Examples, and cured products thereof, are as follows.

<Analysis of Content of Each Component>

The content of each component was analyzed with high-performance liquid chromatography.

Specifically, "pump: PU-4185-Binary", "PDA detector: MD-4010", "column heater: CO-4060", "autosampler: AS-4150", "interface box: LC-NetII/ADC", and "valve unit: RV-2080-02" manufactured by JASCO Corporation were used, a hybrid silica gel-type reverse column ("Unifinepak C18 3.0 mmΦ × 150 mm 3 μm" manufactured by JASCO Corporation) was used as a column for analysis to perform separation, and division by the total (% by area) of the compound (1-1), the compound (2-1), the compound (3-1), the compound (10-1), the compound (11-1), and the compound (12-1) was performed to calculate the proportion (% by area).

Eluent: gradient analysis, acetonitrile/water varying from 30/70 to 100/0 over 60 minutes
Flow rate: 0.5 ml/min
Detection: UV
Temperature: 40°C
Sample concentration: 0.1 to 0.2% by mass
Amount of injection: 10 μl

<Epoxy Equivalent>

Measurement was performed according to JIS K 7236:2009, and the results were designated as the values in terms of solid content.

<Shear Viscosity, Melt Viscosity Ratio>

Measured were the viscosities at 25°C and 100°C in a temperature rise from 25 to 125°C at 5°C/min at a rotational speed of 750 rpm with parallel plates after dripping of a sample onto a plate by use of a viscoelasticity measurement apparatus "HAAKE MARS40 TM-EL-H" (trade name) manufactured by Thermo Fisher Scientific.

The melt viscosity ratio was calculated according to the following formula.

Melt viscosity ratio = Viscosity (Pa·s) at 100°C/Viscosity (Pa·s) at 25°C

<Glass Transition Temperature (Tg)>

The glass transition temperature was measured by heating an epoxy resin from which a solvent medium was dry-removed, from 30 to 250°C at 10°C/min by use of "DSC7020" (trade name) manufactured by SII Nano Technology Inc. The glass transition temperature mentioned here was measured based on "intermediate glass transition temperature: Tmg" among those described in JIS K7121:2012 "Testing Methods for Transition Temperatures of Plastics".

<Dielectric Characteristics>

A film of an epoxy resin-cured product was cut to a test piece having a width of 2 mm and a length of 80 mm, and the test piece was subjected to measurement of dielectric characteristics (permittivity: Dk, dielectric tangent: Df) at measurement frequencies (1 GHz and 10 GHz) with a network analyzer according to a cavity resonance perturbation method. Hereinafter, the details of the apparatus used and the measurement environment are shown. Here, dielectric

characteristics were calculated with dedicated measurement software provided from the manufacturer of the cavity resonator.

Apparatus used: network analyzer "E8361A" (trade name) manufactured by Agilent Technologies
Cavity resonator CP215 (1 GHz), CP184 (10 GHz) manufactured by Kanto Electronics Application & Development Inc.
Measurement environment: temperature 23°C, relative humidity 50%RH

<Average Linear Coefficient of Expansion>

The average linear coefficient of expansion at 60°C to 100°C was measured by using a test piece obtained by cutting the cured product (film) into a size of 2.5 cm in length and 4 mm in width to perform thermomechanical analysis (TMA: Thermomechanical Analyzer) in the following conditions.

Analyzer: "TMA7100" (trade name) manufactured by Hitachi High-Tech Corporation
Measurement mode: tensile mode
Measurement temperature range: 30°C to 250°C
Temperature program: 30°C → 180°C 10°C/min

180°C → -10°C 10°C/min
-10°C → 250°C 5°C/min

<Storage Elastic Modulus E' (220°C)>

The storage elastic modulus (E') at 220°C was measured by using a test piece obtained by cutting the cured product (film) into a size of 5 cm in length and 1 cm in width to perform dynamic viscoelasticity measurement (DMA: Dynamic Mechanical Analysis) in the following conditions.

Analyzer: "DMA7100" (trade name) manufactured by Hitachi High-Tech Corporation
Measurement mode: tensile mode
Measurement temperature range: 30°C to 250°C
Rate of temperature rise: 5°C/min

<Examples 1 to 7 and Comparative Examples 1 to 5: Preparation and Evaluation of Bisphenol-Type Diglycidyl Ether Composition>

[Example 1]

<Preparation of Raw Material Bisphenol Composition>

A separable flask equipped with a thermometer, a dripping funnel, a jacket and an anchor-shaped stirring blade was loaded with 320 g of toluene, 15 g of methanol, 0.1 g of the compound (4-1), and 225 g of the compound (5-1) (manufactured by FUJIFILM Wako Pure Chemical Corporation) under an air atmosphere, and the inner temperature was set to 10°C or less. Thereafter, 95 g of 98% by mass sulfuric acid was slowly added with stirring over 0.3 hours, and then cooled to 5°C or less to obtain a first mixed liquid.
As a second mixed liquid separate from the first mixed liquid, a second mixed liquid (dripping liquid) was prepared by mixing 50 g of toluene, 65 g of acetone, and 5.4 g of dodecanethiol in a 500-ml conical flask.
After the inner temperature of the first mixed liquid was 5°C or less, the dripping funnel was used to feed the second mixed liquid over 1 hour so that the inner temperature did not reach 10°C or more, thereby preparing a reaction liquid. Thereafter, the prepared reaction liquid was stirred at an inner temperature of 10°C for 2.5 hours.
After completion of the above stirring, 190 g of an aqueous 25% sodium hydroxide solution was fed to the reaction liquid, and the temperature was raised to 80°C. After the temperature reached 80°C, the resultant was left to stand, and an aqueous phase as a lower phase was extracted. The resulting first organic phase was loaded with 400 g of desalinated water, the resultant was mixed for 30 minutes and left to stand, and the aqueous phase was removed. To the obtained second organic phase was added 120 g of an aqueous 1.5% by mass sodium hydrogen carbonate solution, the resultant was mixed for 30 minutes and left to stand, and the lower phase was extracted. To the obtained third organic phase was further added 120 g of an aqueous 1.5% by mass sodium hydrogen carbonate solution, the resultant was mixed for 30 minutes and left to stand, and the lower phase was extracted. To the obtained fourth organic phase was added 200 g of

desalinated water, the resultant was mixed for 30 minutes and left to stand, and the aqueous phase as the lower phase was removed to obtain a fifth organic phase. To the obtained fifth organic phase was 200 g of desalinated water, the resultant was mixed for 30 minutes and left to stand, and the lower phase was removed to obtain a sixth organic phase. To the obtained sixth organic phase was added 200 g of desalinated water, the resultant was mixed for 30 minutes and left to stand, and the lower phase was removed.

The obtained sixth organic phase was cooled from 80°C to 20°C and kept at 20°C, to precipitate a bisphenol composition. Thereafter, the resultant was cooled to 10°C to allow the temperature to reach 10°C, and thereafter solid-liquid separation was performed with a centrifugal machine, to obtain a crudely purified wet cake. To the obtained wet cake was poured 500 g of toluene, and thus washed, and solid-liquid separation was performed with a centrifugal machine, to obtain a purified wet cake. The obtained wet cake was subjected to distillation of a low-boiling content with an evaporator equipped with an oil bath under reduced pressure at an oil bath temperature of 100°C, to obtain 178 g of a white bisphenol composition.

<Production of Bisphenol-Type Diglycidyl Ether Composition Including MMBPA>

A flask having a volume of 2 L was charged with 175 g of the resulting bisphenol composition, 822 g of epichlorohydrin, 320 g of isopropyl alcohol, and 114 g of pure water, and these were stirred at a temperature of 40°C to provide a homogeneous solution. Next, 131 g of a 48.5% by mass sodium hydroxide solution was dripped in a temperature range of 40 to 65°C over 1.5 hours, and furthermore retained at 65°C for 30 minutes to complete an epoxidation reaction. After completion of the reaction, unreacted epichlorohydrin and isopropyl alcohol were distilled off under reduced pressure with a temperature rise to 145°C.

Next, 308 g of methyl isobutyl ketone was added into the system for dissolution, and thereafter the resultant was heated to 65°C, and 5 g of a 48.5% by mass sodium hydroxide solution was added thereto to perform a reaction for 1 hour. After the reaction, the solution was washed with pure water four times, and the methyl isobutyl ketone was distilled off at a temperature of 100 to 150°C under reduced pressure, to obtain 227 g of a bisphenol-type diglycidyl ether composition that was liquid at room temperature.

The obtained bisphenol-type diglycidyl ether composition was subjected to calculation of the contents (% by area) of the compound (1-1), the compound (2-1), the compound (3-1), the compound (10-1), the compound (11-1), and the compound (12-1), and measurement of the epoxy equivalent (g/eq) and the shear viscosity (Pa·s), according to the above methods.

The results are shown in Table 1.

[Example 2]

The same manner as in Example 1 was carried out except that the amount of addition of the compound (4-1) and the amount of addition of the compound (5-1) used in preparation of the first mixed liquid were changed respectively to 0.7 g and 224 g, and thus 225 g of a bisphenol-type diglycidyl ether composition that was liquid at room temperature was obtained.

The bisphenol-type diglycidyl ether composition obtained was subjected to calculation of the contents (% by area) of the compound (1-1), the compound (2-1), the compound (3-1), the compound (10-1), the compound (11-1), and the compound (12-1), and measurement of the epoxy equivalent (g/eq) and the shear viscosity (Pa·s), according to the above methods.

The results are shown in Table 1.

[Example 3]

The same manner as in Example 1 was carried out except that the amount of addition of the compound (4-1) and the amount of addition of the compound (5-1) used in preparation of the first mixed liquid were changed respectively to 1.5 g and 223 g, and thus 229 g of a bisphenol-type diglycidyl ether composition that was liquid at room temperature was obtained.

The bisphenol-type diglycidyl ether composition obtained was subjected to calculation of the contents (% by area) of the compound (1-1), the compound (2-1), the compound (3-1), the compound (10-1), the compound (11-1), and the compound (12-1), and measurement of the epoxy equivalent (g/eq) and the shear viscosity (Pa·s), according to the above methods.

The results are shown in Table 1.

[Example 4]

The same manner as in Example 1 was carried out except that the amount of addition of the compound (4-1) and the amount of addition of the compound (5-1) used in preparation of the first mixed liquid were changed respectively to 2 g and 223 g, and thus 224 g of a bisphenol-type diglycidyl ether composition that was liquid at room temperature was obtained.

The bisphenol-type diglycidyl ether composition obtained was subjected to calculation of the contents (% by area) of the compound (1-1), the compound (2-1), the compound (3-1), the compound (10-1), the compound (11-1), and the compound (12-1), and measurement of the epoxy equivalent (g/eq) and the shear viscosity (Pa·s), according to the above methods.

The results are shown in Table 1.

[Example 5]

The same manner as in Example 1 was carried out except that the amount of addition of the compound (4-1) and the amount of addition of the compound (5-1) used in preparation of the first mixed liquid were changed respectively to 7 g and 218 g, and thus 227 g of a bisphenol-type diglycidyl ether composition that was liquid at room temperature was obtained.

The bisphenol-type diglycidyl ether composition obtained was subjected to calculation of the contents (% by area) of the compound (1-1), the compound (2-1), the compound (3-1), the compound (10-1), the compound (11-1), and the compound (12-1), and measurement of the epoxy equivalent (g/eq) and the shear viscosity (Pa·s), according to the above methods.

The results are shown in Table 1.

[Example 6]

The same manner as in Example 1 was carried out except that the amount of addition of the compound (6-1) and the amount of addition of the compound (5-1) used in preparation of the first mixed liquid were changed respectively to 0.1 g and 225 g, and thus 229 g of a bisphenol-type diglycidyl ether composition that was liquid at room temperature was obtained.

The bisphenol-type diglycidyl ether composition obtained was subjected to calculation of the contents (% by area) of the compound (1-1), the compound (2-1), the compound (3-1), the compound (10-1), the compound (11-1), and the compound (12-1), and measurement of the epoxy equivalent (g/eq) and the shear viscosity (Pa·s), according to the above methods.

The results are shown in Table 1.

[Example 7]

The epoxy resin synthesized in Example 6 was dissolved so as to be saturated in hexane/ethyl acetate (3:1), and the compound (2-1) and the compound (11-1) were removed by silica gel column chromatography with hexane/ethyl acetate (3:1) as a developing solvent.

The contents (% by area) of the compound (1-1), the compound (2-1), the compound (3-1), the compound (10-1), the compound (11-1), and the compound (12-1) were calculated and the epoxy equivalent (g/eq) and the shear viscosity (Pa·s) were measured according to the above methods.

The results are shown in Table 1.

[Comparative Example 1]

The bisphenol-type diglycidyl ether composition (epoxy resin) synthesized in Example 1 was dissolved so as to be saturated in hexane/ethyl acetate (3:1), and the compound (1-1) was isolated by silica gel column chromatography with hexane/ethyl acetate (3:1) as a developing solvent.

The compound (1-1) isolated was used, and the contents (% by area) of the compound (1-1), the compound (2-1), the compound (3-1), the compound (10-1), the compound (11-1), and the compound (12-1) were calculated and the epoxy equivalent (g/eq) and the shear viscosity (Pa·s) were measured according to the above methods.

The results are shown in Table 1.

[Comparative Example 2]

A flask having a volume of 0.5 L was charged with 30 g of tetramethylbisphenol A (manufactured by Tokyo Chemical Industry Co., Ltd.), 127 g of epichlorohydrin, 50 g of isopropyl alcohol, and 18 g of pure water, and these were stirred at a temperature of 40°C to provide a homogeneous solution. Next, 20 g of a 48.5% by mass sodium hydroxide solution was dripped in a temperature range of 40 to 65°C over 1.5 hours, and furthermore retained at 65°C for 30 minutes to complete an epoxidation reaction. After completion of the reaction, unreacted epichlorohydrin and isopropyl alcohol were distilled off under reduced pressure with a temperature rise to 145°C.

Next, 51 g of methyl isobutyl ketone was added into the system for dissolution, and thereafter the resultant was heated to 65°C, and 0.88 g of a 48.5% by mass sodium hydroxide solution was added thereto to perform a reaction for 1 hour. After the reaction, the solution was washed with pure water four times, and the methyl isobutyl ketone was distilled off at a temperature of 100 to 150°C under reduced pressure, to obtain 28.4 g of tetramethylbisphenol A-type diglycidyl ether (compound (10-1)) that was liquid at room temperature.

To 3 g of the bisphenol C-type diglycidyl ether (compound 1-1) generated in Comparative Example 1 was added 4 mg of the compound (10-1), to obtain a bisphenol-type diglycidyl ether composition according to Comparative Example 2.

The bisphenol-type diglycidyl ether composition according to Comparative Example 2 was subjected to calculation of the contents (% by area) of the compound (1-1), the compound (2-1), the compound (3-1), the compound (10-1), the compound (11-1), and the compound (12-1), and measurement of the epoxy equivalent (g/eq) and the shear viscosity (Pa·s), according to the above methods.

The results are shown in Table 1.

[Comparative Example 3]

To 3 g of the compound (1-1) isolated in Comparative Example 1 was added 3 mg of bisphenol A-type diglycidyl ether (trade name: jER828US (manufactured by Mitsubishi Chemical Group Corporation)), to obtain a bisphenol-type diglycidyl ether composition according to Comparative Example 3.

The bisphenol-type diglycidyl ether composition according to Comparative Example 3 subjected to calculation of the contents (% by area) of the compound (1-1), the compound (2-1), the compound (3-1), the compound (10-1), the compound (11-1), and the compound (12-1), and measurement of the epoxy equivalent (g/eq) and the shear viscosity (Pa·s), according to the above methods.

[Comparative Example 4]

Bisphenol A-type diglycidyl ether (trade name: jER828US (manufactured by Mitsubishi Chemical Group Corporation)) was subjected to calculation of the contents (% by area) of the compound (1-1), the compound (2-1), the compound (3-1), the compound (10-1), the compound (11-1), and the compound (12-1), and measurement of the epoxy equivalent (g/eq) and the shear viscosity (Pa·s), according to the above methods.

The results are shown in Table 1.

[Comparative Example 5]

A flask having a volume of 2 L was charged with 200 g of bisphenol AF (trade name: Bis-AF (H) (manufactured by Central Glass Co., Ltd.)), 660 g of epichlorohydrin, 258 g of isopropyl alcohol, and 275 g of pure water, and these were stirred at a temperature of 40°C to provide a homogeneous solution. Next, 114 g of a 48.5% by mass sodium hydroxide solution was dripped in a temperature range of 40 to 65°C over 1.5 hours, and furthermore retained at 65°C for 30 minutes to complete an epoxidation reaction. After completion of the reaction, unreacted epichlorohydrin and isopropyl alcohol were distilled off under reduced pressure with a temperature rise to 145°C.

Next, 400 g of methyl isobutyl ketone was added into the system for dissolution, and thereafter the resultant was heated to 65°C, and 5.6 g of a 48.5% by mass sodium hydroxide solution was added thereto to perform a reaction for 1 hour. After the reaction, the solution was washed with pure water four times, and the methyl isobutyl ketone was distilled off at a temperature of 100 to 150°C under reduced pressure, to obtain 247 g of bisphenol AF-type diglycidyl ether (compound (12-1)) that was liquid at room temperature.

The compound (12-1) obtained was subjected to calculation of the contents (% by area) of the compound (1-1), the compound (2-1), the compound (3-1), the compound (10-1), the compound (11-1), and the compound (12-1), and measurement of the epoxy equivalent (g/eq) and the shear viscosity (Pa·s), according to the above methods.

The results are shown in Table 1.

[Table 1]

Table 1

| | | Unit | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 |
|---|---|---|---|---|---|---|---|---|---|---|---|---|---|---|
| Ratio of constituent components | Compound(1-1) | % by area | 99.886 | 99.576 | 99.001 | 98.777 | 95.917 | 99.808 | 99.897 | 100.000 | 99.876 | 99.908 | 0.000 | 0.000 |
| | Compound(2-1) | % by area | 0.059 | 0.365 | 0.857 | 1.142 | 3.693 | 0.082 | 0.000 | 0.000 | 0.000 | 0.000 | 0.000 | 0.000 |
| | Compound(3-1) | % by area | 0.000 | 0.000 | 0.000 | 0.000 | 0.000 | 0.052 | 0.103 | 0.000 | 0.000 | 0.000 | 0.000 | 0.000 |
| | Compound(10-1) | % by area | 0.000 | 0.000 | 0.000 | 0.000 | 0.000 | 0.000 | 0.000 | 0.000 | 0.124 | 0.000 | 0.000 | 0.000 |
| | Compound(11-1) | % by area | 0.054 | 0.059 | 0.142 | 0.081 | 0.356 | 0.058 | 0.000 | 0.000 | 0.000 | 0.092 | 100.000 | 0.000 |
| | Compound(12-1) | % by area | 0.000 | 0.000 | 0.000 | 0.000 | 0.000 | 0.000 | 0.000 | 0.000 | 0.000 | 0.000 | 0.000 | 100.000 |
| Epoxy equivalent | | g/equivalent | 195 | 191 | 195 | 194 | 193 | 191 | 198 | 184 | 185 | 186 | 185 | 238 |
| Shear viscosity (25°C) | | Pa·s | 617 | 501 | 510 | 550 | 471 | 492 | 482 | 243 | 227 | 232 | 29 | - |
| Shear viscosity (100°C) | | | 0.120 | 0.121 | 0.112 | 0.133 | 0.121 | 0.117 | 0.124 | 0.090 | 0.088 | 0.096 | 0.077 | 0.172 |
| Melt viscosity ratio | | $\times 10^{-5}$ (Pas, 100°C/Pas, 25°C) | 1.95 | 2.41 | 2.19 | 2.41 | 2.57 | 2.37 | 2.57 | 3.71 | 3.88 | 4.14 | 26.55 | - |
| Total amount of chlorine | | ppm | 975 | 1178 | 992 | 1023 | 1120 | 998 | 998 | 235 | 253 | 242 | 1375 | 1017 |

<Examples 8 to 14 and Comparative Examples 6 to 10: Preparation and Evaluation of Curable Composition>

The following curing agent (B), any other epoxy resin (D), and curing accelerator (E) were used to obtain curable compositions according to Examples 8 to 14 and Comparative Examples 6 to 10.

[Curing Agent (B)]
(B-1): commercially available polyarylate resin (polyarylate having a bisphenol backbone, active equivalent: 220 g/equivalent)
[Any other epoxy resin (D)]
(D-1): polymeric epoxy resin (manufactured by Mitsubishi Chemical Group Corporation, trade name "YX7891T30", Mn:10,000, Mw:30,000, epoxy equivalent: 6,000 g/equivalent, resin content: 30% by mass) as any other epoxy resin serving as film formation agent
[Curing Accelerator (E)]
(E-1): 4,4'-dimethylaminopyridine (DMAP)

[Examples 8 to 14 and Comparative Examples 6 to 10]

The polyarylate resin (B-1) was dissolved in cyclohexanone so that the resin content was 40% by mass, and thus a solution of the polyarylate resin (B=1) was prepared.
In addition, 4,4'-dimethylaminopyridine (E-1) was dissolved in toluene so that the content was 5% by mass, and thus a solution of a curing accelerator was obtained.
The prepared solutions, the bisphenol-type diglycidyl ether compositions according to Examples 1 to 7 and Comparative Examples 1 to 3, and the glycidyl ethers according to Comparative Examples 4 to 5 were mixed so that the compounding ratio shown in Table 2 was achieved, and thus curable compositions according to Examples 8 to 14 and Comparative Examples 6 to 10 were obtained.
Each solution of the curable compositions obtained in Examples 8 to 14 and Comparative Examples 6 to 10 was applied onto a release PET film (polyethylene terephthalate film silicone-treated), with an applicator having a thickness of 300 μm and a width of 5 cm, dried at 160°C for 1.5 hours, and thereafter cured at 200°C for 1.5 hours, to obtain each epoxy resin-cured product film according to Examples 8 to 14 and Comparative Examples 6 to 10.
The epoxy resin-cured product film thus obtained was evaluated with respect to the glass transition temperature (°C), dielectric characteristics (1 GHz, 10 GHz), the average linear coefficient of expansion, and the storage elastic modulus (Pa) according to the above methods. The results are together shown in Table 2.

[Table 2]

Table 2

| | | | Example 8 | Example 9 | Example 10 | Example 11 | Example 12 | Example 13 | Example 14 | Comparative Example 6 | Comparative Example 7 | Comparative Example 8 | Comparative Example 9 | Comparative Example 10 |
|---|---|---|---|---|---|---|---|---|---|---|---|---|---|---|
| Proportion of raw material in curable composition (parts by weight) | Epoxy resin | Composition according to Example 1 Compound(1-1)+Compound(2-1) | 3.00 | - | - | - | - | - | - | - | - | - | - | - |
| | | Composition according to Example 2 Compound(1-1)+Compound(2-1) | - | 3.00 | - | - | - | - | - | - | - | - | - | - |
| | | Composition according to Example 3 Compound(1-1)+Compound(2-1) | - | - | 3.00 | - | - | - | - | - | - | - | - | - |
| | | Composition according to Example 4 Compound(1-1)+Compound(2-1) | - | - | - | 3.00 | - | - | - | - | - | - | - | - |
| | | Composition according to Example 5 Compound(1-1)+Compound(2-1) | - | - | - | - | 3.00 | - | - | - | - | - | - | - |
| | | Composition according to Example 6 Compound(1-1)+Compound(2-1) +Compounx(3-1) | - | - | - | - | - | 3.00 | - | - | - | - | - | - |
| | | Composition according to Example 7 Compound(1-1)+Compound(3-1) | - | - | - | - | - | - | 3.00 | - | - | - | - | - |
| | | Composition according to Comparative Example 1 Compound(1-1) only | - | - | - | - | - | - | - | 3.00 | - | - | - | - |
| | | Composition according to Comparative Example 2 Compound(1-1)+Compound(10-1) | - | - | - | - | - | - | - | - | 1.50 | - | - | - |
| | | Composition according to Comparative Example 3 Compound(1-1)+Compound(11-1) | - | - | - | - | - | - | - | - | - | 1.50 | - | - |

(continued)

| | | | Example 8 | Example 9 | Example 10 | Example 11 | Example 12 | Example 13 | Example 14 | Comparative Example 6 | Comparative Example 7 | Comparative Example 8 | Comparative Example 9 | Comparative Example 10 |
|---|---|---|---|---|---|---|---|---|---|---|---|---|---|---|
| | | Bisphenol A-type diglycidyl ether of Comparative Example 4 | - | - | - | - | - | - | - | - | - | - | 3.00 | - |
| | | Bisphenol AF-type diglycidyl ether of Comparative Example 5 | - | - | - | - | - | - | - | - | - | - | - | 3.00 |
| | Other epoxy resin (Polymeric epoxy resin) | YX7891T30 | 2.13 | 2.15 | 2.13 | 2.14 | 2.14 | 2.15 | 2.11 | 2.2 | 1.09 | 1.09 | 2.19 | 1.94 |
| | Curing agent | Commercially available polyarylate resin B-1 | 8.3 | 8.47 | 8.3 | 8.34 | 8.38 | 8.64 | 8.33 | 8.79 | 4.46 | 4.44 | 8.74 | 6.88 |
| | Curing accelerator | DMAP | 0.7 | 0.71 | 0.7 | 0.71 | 0.71 | 0.71 | 0.7 | 0.72 | 0.36 | 0.36 | 0.73 | 0.64 |
| Glass transition temperature (Tg, DSC) | | °C | 156.7 | 159.2 | 158.1 | 160.6 | 161.1 | 157.3 | 156.1 | 163 | 157.5 | 156.8 | 141 | 173 |
| Average linear coefficient of heat expansion | | 60-100°C | $6.956\times10^{-5}$ | $6.800\times10^{-5}$ | $6.750\times10^{-5}$ | $6.051\times10^{-5}$ | $6.907\times10^{-5}$ | $7.065\times10^{-5}$ | $6.554\times10^{-5}$ | $7.621\times10^{-5}$ | $7.580\times10^{-5}$ | $7.531\times10^{-5}$ | $7.260\times10^{-5}$ | $7.210\times10^{-5}$ |
| Storage elastic modulus | | Pa | $2.5\times10^{7}$ | $2.4\times10^{7}$ | $2.5\times10^{7}$ | $2.5\times10^{7}$ | $2.6\times10^{7}$ | $2.2\times10^{7}$ | $2.3\times10^{7}$ | $2.8\times10^{7}$ | $2.8\times10^{7}$ | $3.4\times10^{7}$ | $2.9\times10^{7}$ | $3.2\times10^{7}$ |
| Dielectric tangent | | 1GHz | 0.0086 | 0.009 | 0.0087 | 0.0089 | 0.0087 | 0.0082 | 0.0088 | 0.0085 | 0.0077 | 0.0078 | 0.0116 | 0.012 |
| | | 10GHz | 0.0099 | 0.0094 | 0.0089 | 0.0093 | 0.0089 | 0.0082 | 0.0084 | 0.0087 | 0.0075 | 0.0081 | 0.0106 | 0.011 |

## Claims

1. A bisphenol-type diglycidyl ether composition containing a bisphenol C-type diglycidyl ether represented by the following formula (1) and a compound represented by the following formula (2) :

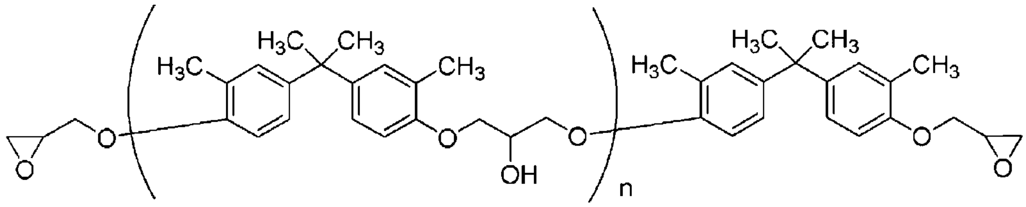

...(1)

wherein, in the above formula (1), n represents the number of repetitions and is an integer of 0 or more,

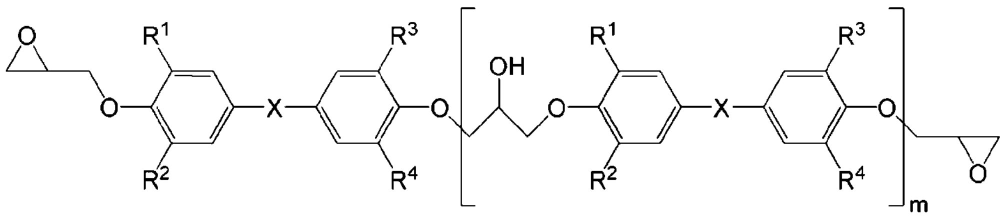

...(2)

wherein, in the above formula (2), substituents $R^1$ to $R^4$ are each independently selected from the group consisting of a hydrogen atom and an alkyl group having 1 to 5 carbon atoms, provided that a case where all the substituents $R^1$ to $R^4$ are hydrogen atoms, a case where all the substituents are alkyl groups each having 1 to 5 carbon atoms, and a case where the combination of $R^1$ and $R^2$ is the same as the combination of $R^3$ and $R^4$ are excluded; a linking group X each independently represents a group selected from the group consisting of a divalent hydrocarbon group having 1 to 13 carbon atoms, -O-, -S-, $-SO_2-$, $-C(CF_3)_2-$, and -CO-, or a direct bond; and m represents a number of repetitions and is an integer of 0 or more, provided that a case where the compound represented by the formula (2) is the bisphenol C-type diglycidyl ether represented by the formula (1) is excluded.

2. The bisphenol-type diglycidyl ether composition according to claim 1, wherein a content of the compound represented by the formula (2) in the bisphenol-type diglycidyl ether composition is 0.001 to 15.000% by area in high-performance liquid chromatography measurement.

3. The bisphenol-type diglycidyl ether composition according to claim 1, wherein, in the formula (2), one to three of the substituents $R^1$ to $R^4$ are hydrogen atoms and the remainder are alkyl groups having 1 to 3 carbon atoms; the linking group X is an alkylene group having 1 to 13 carbon atoms; and m is 0 or 1.

4. The bisphenol-type diglycidyl ether composition according to claim 1, wherein a content of the bisphenol C-type diglycidyl ether represented by the formula (1) in the bisphenol-type diglycidyl ether composition is 40.000 to 99.999% by area in high-performance liquid chromatography measurement.

5. The bisphenol-type diglycidyl ether composition according to claim 1, wherein an epoxy equivalent is 184 to 250 g/equivalent.

6. The bisphenol-type diglycidyl ether composition according to claim 1, wherein the composition is liquid at room temperature and has a melt viscosity ratio, calculated by the following formula, of $3.00 \times 10^{-5}$ or less:

Melt viscosity ratio = Shear viscosity (Pa·s) at 100°C/Shear viscosity (Pa·s) at 25°C.

7. The bisphenol-type diglycidyl ether composition according to claim 1, wherein a total amount of chlorine in the

bisphenol-type diglycidyl ether composition is 5,000 ppm or less.

**8.** A curable composition comprising the bisphenol-type diglycidyl ether composition according to any one of claims 1 to 7, and a curing agent.

**9.** The curable composition according to claim 8, comprising the curing agent at a solid content of 0.1 to 100 parts by mass based on a solid content of 100 parts by mass of the bisphenol-type diglycidyl ether composition.

**10.** The curable composition according to claim 8, wherein the curing agent is at least one selected from the group consisting of a phenol-based curing agent, an amide-based curing agent, an imidazole compound, and an active ester-based curing agent.

**11.** A cured product of the curable composition according to claim 8.

**12.** An electrical/electronic component comprising a cured product of the curable composition according to claim 8.

## INTERNATIONAL SEARCH REPORT

International application No.
**PCT/JP2024/008459**

**A. CLASSIFICATION OF SUBJECT MATTER**

***C08G 59/06***(2006.01)i; ***C08G 59/24***(2006.01)i
FI: C08G59/06; C08G59/24

According to International Patent Classification (IPC) or to both national classification and IPC

**B. FIELDS SEARCHED**

Minimum documentation searched (classification system followed by classification symbols)

C08G59/06; C08G59/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2007-197518 A (FUJIFILM CORPORATION) 09 August 2007 (2007-08-09) claims, paragraph [0024], example 24 | 1-12 |
| A | JP 2021-508748 A (HUNTSMAN ADVANCED MATERIALS AMERICAS LLC) 11 March 2021 (2021-03-11) claims, examples | 1-12 |
| A | WO 2022/149468 A1 (MITSUBISHI CHEMICAL CORPORATION) 14 July 2022 (2022-07-14) claims, examples | 1-12 |
| P, A | JP 2023-36020 A (MITSUBISHI CHEMICAL CORPORATION) 13 March 2023 (2023-03-13) claims, examples | 1-12 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/008459**

| Patent document cited in search report | Publication date (day/month/year) | Patent family member(s) | Publication date (day/month/year) |
|---|---|---|---|
| JP 2007-197518 A | 09 August 2007 | (Family: none) | |
| JP 2021-508748 A | 11 March 2021 | US 2020/0385515 A1<br>claims, examples<br>WO 2019/126073 A1<br>EP 3728390 A1<br>KR 10-2020-0103059 A<br>CN 111819215 A | |
| WO 2022/149468 A1 | 14 July 2022 | CN 116745274 A<br>KR 10-2023-0127342 A | |
| JP 2023-36020 A | 13 March 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 10344160 B1
- JP 2013155337 A